(19) **Europäisches Patentamt**
**European Patent Office**
**Office européen des brevets**

(11) **EP 4 316 910 B1**

(12) **FASCICULE DE BREVET EUROPEEN**

(45) Date de publication et mention
de la délivrance du brevet:
**04.03.2026 Bulletin 2026/10**

(21) Numéro de dépôt: **23174979.7**

(22) Date de dépôt: **13.09.2016**

(51) Classification Internationale des Brevets (IPC):
*B60Q 1/00* (2006.01)      *G03B 21/00* (2006.01)
*G06F 3/01* (2006.01)      *G06T 3/00* (2024.01)

(52) Classification Coopérative des Brevets (CPC):
**G06F 3/011; G06F 3/013;** B60Q 2400/50

(54) **PROCEDE DE PROJECTION POUR VEHICULE AUTOMOBILE D'UNE IMAGE SUR UNE SURFACE DE PROJECTION**

PROJEKTIONSVERFAHREN FÜR EIN KRAFTFAHRZEUG ZUM PROJIZIEREN EINES BILDES AUF EINE PROJEKTIONSFLÄCHE

PROJECTION METHOD FOR A MOTOR VEHICLE, FOR PROJECTING AN IMAGE ONTO A PROJECTION SURFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2015 FR 1558592**

(43) Date de publication de la demande:
**07.02.2024 Bulletin 2024/06**

(62) Numéro(s) de document de la (des) demande(s) initiale(s) en application de l'article 76 CBE:
**16763861.8 / 3 350 018**

(73) Titulaire: **Valeo Vision**
**93012 Bobigny Cedex (FR)**

(72) Inventeurs:
• **MOREL, Xavier**
  **93012 BOBIGNY CEDEX (FR)**
• **EL IDRISSI, Hafid**
  **93012 BOBIGNY CEDEX (FR)**
• **SOMMERSCHUH, Stephan**
  **93012 BOBIGNY CEDEX (FR)**
• **ALBOU, Pierre**
  **93012 BOBIGNY CEDEX (FR)**

(74) Mandataire: **Valeo Visibility**
**IP department**
**34, rue Saint André**
**93012 Bobigny Cedex (FR)**

(56) Documents cités:
EP-A1- 2 233 356      EP-A2- 2 351 668
WO-A1-00/35200      WO-A1-02/093483
FR-A1- 2 919 934      JP-A- 2009 184 428
US-A1- 2010 253 492      US-A1- 2014 085 470

**Description**

DOMAINE TECHNIQUE DE L'INVENTION

La présente invention concerne un procédé de projection pour véhicule automobile d'au moins une image sur une surface de projection au moyen d'un module lumineux.

Elle trouve une application particulière mais non limitative dans les dispositifs d'éclairage, tels que des projecteurs de véhicule automobile.

ARRIÈRE-PLAN TECHNOLOGIQUE DE L'INVENTION

Un procédé de projection pour véhicule automobile d'au moins une image connu de l'homme du métier comprend la projection sur une surface de projection, telle que la route, d'un symbole graphique compréhensible pour le conducteur du véhicule automobile afin de l'aider dans sa conduite. Par exemple, le symbole graphique peut être la vitesse limite à ne pas dépasser sur la route, ou encore la distance à laquelle il se trouve d'un autre véhicule automobile.

Un inconvénient de cet état de la technique est que ce procédé s'applique pour le conducteur uniquement.

EP 2233356 A1 divulgue un dispositif d'affichage d'informations qui vise à permettre à un conducteur de véhicule de connaître des informations prédéterminées sans trop détourner le regard et même en présence d'une lumière environnante, telle que celle de phares. Un dispositif de commande d'agencement de lumière de lampes est commandé de telle sorte que la direction d'une personne estimée être en danger et la distance à cette personne est affichée par une partie à luminosité réduite sur la surface de la route comme partie de la zone éclairée par les lampes.

JP 2009184428 A divulgue un dispositif d'éclairage d'un véhicule, comportant un générateur d'images qui traite l'image en faisant pivoter la direction des informations contenues dans l'image en fonction de la position détectée d'un objet cible.

Dans ce contexte, la présente invention vise à proposer un procédé de projection pour véhicule automobile d'au moins une image sur une surface de projection au moyen d'un module lumineux qui s'applique quelque soit la position d'observation de l'observateur par rapport au véhicule automobile et qui permette ainsi d'obtenir une image qui est compréhensible par un observateur extérieur au véhicule automobile ou qui est compréhensible par un observateur situé à l'intérieur du véhicule automobile.

DESCRIPTION GENERALE DE L'INVENTION

A cette fin l'invention propose un procédé de projection pour véhicule automobile d'au moins une image sur une surface de projection au moyen d'un module lumineux adapté pour projeter un faisceau lumineux, dans lequel ledit procédé de projection comprend les étapes de :

- détecter une position d'observation d'un observateur dans un référentiel module lumineux, ladite étape consistant à considérer que :
- lorsque l'observateur se trouve à l'intérieur du véhicule automobile, la position d'observation se situe au niveau de l'œil du conducteur ;
- lorsque l'observateur se trouve à l'extérieur du véhicule automobile, dit observateur extérieur, la position d'observation se situe au niveau de l'œil dudit observateur extérieur ;
- calculer la position d'observation de l'observateur dans un référentiel image ;
- projeter ladite image sur ladite surface de projection en fonction de ladite position d'observation de l'observateur dans ledit référentiel image, ladite image étant intégrée dans ledit faisceau lumineux du module lumineux, dans lequel la projection de ladite image comporte les sous-étapes de :
- à partir d'une carte d'intensité lumineuse du faisceau lumineux du module lumineux comprenant une pluralité d'indicatrices d'intensité, calculer une cartographie de luminance sur la surface de projection résultant en des points de luminance ;
- calculer la position de chaque point de luminance dans le référentiel image ;
- à partir de sa position et de la position d'observation de l'observateur dans ledit référentiel image, définir les coordonnées de la projection de chaque point de luminance sur le plan image de ladite image à projeter ;
- si ladite projection appartient à ladite image à projeter, définir des coordonnées du pixel correspondant ;
- pour chaque projection d'un point de luminance appartenant à ladite image à projeter, corriger la valeur d'intensité de l'indicatrice d'intensité correspondante en fonction de la couleur du pixel correspondant.

Ainsi, comme on va le voir en détail ci-après, la projection de l'image à projeter est dépendante de la position d'observation d'un observateur et est introduite dans le faisceau lumineux du module lumineux. De cette manière, elle est rendue ainsi visible et compréhensible par ledit observateur, que ce dernier soit situé à l'intérieur de l'habitacle du véhicule automobile ou à l'extérieur au véhicule automobile.

Selon des modes de réalisation non limitatifs, le procédé de projection peut comporter en outre une ou plusieurs caractéristiques supplémentaires parmi les suivantes :

Selon un mode de réalisation non limitatif, le calcul de la cartographie de luminance sur la surface de projection comprend les étapes de :

- effectuer un premier calcul de la position desdites indicatrices d'intensité sur la surface de projection résultant en des points d'impact ;
- effectuer un deuxième calcul d'une cartographie d'éclairement desdits points d'impact ;
- effectuer un troisième calcul de la cartographie de luminance desdits points d'impacts à partir de la cartographie d'éclairement résultant en lesdits points de luminance.

Selon un mode de réalisation non limitatif, ledit premier calcul est basé sur :

- la position du module lumineux ; et
- la direction desdites indicatrices d'intensité.

Selon un mode de réalisation non limitatif, ledit deuxième calcul est basé sur :

- la position calculée des indicatrices d'intensité ;
- l'intensité lumineuse desdites indicatrices d'intensité ; et
- la distance entre le module lumineux et lesdits points d'impacts.

Selon un mode de réalisation non limitatif, l'image à projeter est calculée en fonction de propriétés de la surface de projection.

Selon un mode de réalisation non limitatif, ledit troisième calcul est basé sur :

- l'éclairement desdits points d'impacts ;
- un vecteur de position entre la position d'un point d'impact de la cartographie d'éclairement et la position d'observation de l'observateur ; et
- une fonction de diffusion de la lumière.

Selon un mode de réalisation non limitatif, le calcul de la position d'observation d'un observateur et de la position d'un point de luminance dans le référentiel image est basé sur au moins une matrice de transformation du référentiel module lumineux vers ledit référentiel image qui prend en compte au moins un des paramètres suivants :

- la position de l'image à projeter dans le référentiel module lumineux ;
- la rotation de l'image à projeter.

Selon un mode de réalisation non limitatif, la définition des coordonnées d'une projection d'un point de luminance comprend les sous-étapes de :

- calculer le point d'intersection entre :

  - la droite passant par la position d'observation dans ledit référentiel image de l'observateur et par la position dans ledit référentiel image dudit point de luminance ; et
  - le plan image de l'image à projeter ;

- déterminer les coordonnées dudit point d'intersection à partir de des dimensions de ladite image à projeter.

Selon un mode de réalisation non limitatif, la surface de projection est considérée comme un diffuseur lambertien.

Selon un mode de réalisation non limitatif, la surface de projection est un sol ou un mur.

Selon un mode de réalisation non limitatif, l'observateur est extérieur au véhicule automobile ou est situé dans ledit véhicule automobile.

Selon un mode de réalisation non limitatif, l'image apparait déformée dans le référentiel module lumineux et non déformée dans le référentiel image.

Selon un mode de réalisation non limitatif, le calcul de la position d'observation de l'observateur dans le référentiel image est fonction de la position et de la rotation de l'image à projeter dans le référentiel module lumineux, ladite rotation étant fonction d'un angle site supérieur à -90° et inférieur ou égal à 0°;

Selon un mode de réalisation non limitatif, le calcul de la position de chaque point de luminance dans le référentiel image est fonction de la position et de la rotation de l'image à projeter dans le référentiel module lumineux, ladite rotation étant fonction d'un angle site supérieur à -90° et inférieur ou égal à 0°;

Selon un mode de réalisation non limitatif, l'angle site est égal à 0.

Selon un mode de réalisation non limitatif, l'angle site est sensiblement égal à moins 35°.

Selon un mode de réalisation non limitatif, la projection de chaque point de luminance sur le plan image de ladite image à projeter est centrale, de façon à produire un effet de perspective conique.

Selon un mode de réalisation non limitatif, la correction de la valeur d'intensité de l'indicatrice d'intensité est effectuée comme suit :

$$Vi = \sigma . Vi0 * Co / 255,$$

, avec Vi la valeur d'intensité corrigée, Vi0 la valeur d'intensité initiale de l'indicatrice d'intensité du module lumineux, Co la couleur du pixel correspondant, $\sigma$ un facteur de surintensification maximale.

Selon un mode de réalisation non limitatif, la correction de la valeur d'intensité de l'indicatrice d'intensité est effectuée comme suit :

$$Vi = \varphi . Co,$$

, avec Vi la valeur d'intensité corrigée, $\varphi$ un coefficient de luminance, Co la couleur du pixel correspondant.

Selon un mode de réalisation non limitatif, la position d'observation d'un observateur est calculée au moyen d'une caméra.

Selon un mode de réalisation non limitatif, la carte d'intensité lumineuse est stockée dans une mémoire.

Selon un mode de réalisation non limitatif, la projection de ladite image sur la surface de projection comporte en outre la sous-étape de projeter au moyen dudit module lumineux sur la surface de projection le faisceau lumineux avec les valeurs d'intensité corrigées des indicatrices d'intensité.

Il est également proposé un dispositif d'éclairage pour véhicule automobile comprenant une unité de traitement et un module lumineux adapté pour projeter un faisceau lumineux, dans lequel :

- ladite unité de traitement est adaptée pour :

  - détecter une position d'observation d'un observateur dans un référentiel module lumineux en considérant que :

    - lorsque l'observateur se trouve à l'intérieur du véhicule automobile, la position d'observation se situe au niveau de l'œil du conducteur ;
    - lorsque l'observateur se trouve à l'extérieur du véhicule automobile, dit observateur extérieur, la position d'observation se situe au niveau de l'œil dudit observateur extérieur ;
    - calculer la position d'observation de l'observateur dans un référentiel image ;
    - ledit dispositif d'éclairage est adapté pour projeter ladite image sur ladite surface de projection en fonction de ladite position d'observation de l'observateur dans le référentiel image, ladite image étant intégrée dans ledit faisceau lumineux du module lumineux, dans lequel, pour la projection de ladite image sur la surface de projection, ladite unité de traitement est en outre adaptée pour :

      - à partir d'une carte d'intensité lumineuse du faisceau lumineux du module lumineux comprenant une pluralité d'indicatrices d'intensité, calculer une cartographie de luminance sur la surface de projection résultant en des points de luminance ;
      - calculer la position de chaque point de luminance dans le référentiel image ;
      - à partir de sa position et de la position d'observation de l'observateur dans ledit référentiel image, définir les coordonnées de la projection de chaque point de luminance sur le plan image de ladite image à projeter ;

- si ladite projection appartient à ladite image à projeter, définir des coordonnées du pixel correspondant ;
- pour chaque projection d'un point de luminance appartenant à ladite image à projeter, corriger la valeur d'intensité de l'indicatrice d'intensité correspondante en fonction de la couleur du pixel correspondant.

Selon un mode de réalisation non limitatif, pour la projection de ladite image sur la surface de projection, le module lumineux est adapté pour projeter sur la surface de projection le faisceau lumineux avec les valeurs d'intensité corrigées des indicatrices d'intensité.

Selon un mode de réalisation non limitatif, le dispositif d'éclairage est un projecteur ou un feu arrière.

Selon un mode de réalisation non limitatif, l'unité de traitement est intégrée dans le module lumineux.

Il est également proposé un véhicule automobile comprenant un dispositif d'éclairage selon les caractéristiques précédentes.

BREVE DESCRIPTION DES FIGURES

L'invention et ses différentes applications seront mieux comprises à la lecture de la description qui suit et à l'examen des figures qui l'accompagnent.

- la figure 1 représente un organigramme des étapes du procédé de projection d'au moins une image sur une surface de projection selon un mode de réalisation non limitatif de l'invention ;
- la figure 2 représente un véhicule automobile comprenant un dispositif d'éclairage adapté pour mettre en œuvre le procédé de projection de la figure 1 selon un mode de réalisation non limitatif ;
- la figure 3 représente une carte d'intensité lumineuse établie selon une étape du procédé de projection de la figure 1 selon un mode de réalisation non limitatif ;
- la figure 4 représente un projecteur qui intègre un module lumineux et la direction d'un rayon lumineux d'un module lumineux dudit projecteur, ledit module lumineux étant adapté pour réaliser au moins une étape du procédé de projection de la figure 1 ;
- la figure 5 représente un organigramme illustrant des sous-étapes d'une étape d'établissement d'une carte de luminance du procédé de projection de la figure 1 selon un mode de réalisation non limitatif ;
- la figure 6 représente le projecteur de la figure 4 et un point d'impact du rayon lumineux sur le sol ;
- la figure 7 représente le projecteur de la figure 6 et l'éclairement du point d'impact ;
- la figure 8 indique l'angle site et l'angle azimut pris en compte dans une étape de calcul de la position d'observation d'un observateur du procédé de projection de la figure 1 ;
- la figure 9 représente schématiquement un point d'impact, une position d'observation d'un observateur extérieur au véhicule automobile dans un référentiel image et une image à projeter par le procédé de projection de la figure 1 ;
- la figure 10 illustre une image projetée selon le procédé de projection de la figure 1, image qui est vue du point de vue du conducteur dudit véhicule automobile mais qui est seulement compréhensible par un observateur extérieur au véhicule automobile ;
- la figure 11 illustre une image projetée selon le procédé de projection de la figure 1, image qui est vue du point de vue d'un passager arrière dudit véhicule automobile mais qui est seulement compréhensible par un observateur extérieur au véhicule automobile ;
- la figure 12 illustre une image projetée selon le procédé de projection de la figure 1, image qui est vue du point de vue dudit observateur extérieur au véhicule automobile et qui est compréhensible par ledit observateur extérieur au véhicule automobile ;
- la figure 13 représente un organigramme illustrant des sous-étapes d'une étape de définition des coordonnées d'une projection d'un point de luminance du procédé de projection de la figure 1 selon un mode de réalisation non limitatif ;
- la figure 14 représente schématiquement le point d'impact, la position d'observation de l'observateur extérieur au véhicule automobile et l'image à projeter de la figure 9 par le procédé de projection de la figure 1 et les coordonnées de l'intersection entre le point d'impact et l'image à projeter ;
- la figure 15 représente schématiquement le point d'impact, la position d'observation de l'observateur extérieur au véhicule automobile et l'image à projeter de la figure 14 normalisée ; et
- la figure 16 représente schématiquement des pixels de l'image à projeter de la figure 14 ; et
- la figure 17 illustre un dispositif d'éclairage adapté pour mettre en œuvre le procédé de projection de la figure 1.

DESCRIPTION DE MODES DE REALISATION DE L'INVENTION

Les éléments identiques, par structure ou par fonction, apparaissant sur différentes figures conservent, sauf précision contraire, les mêmes références.

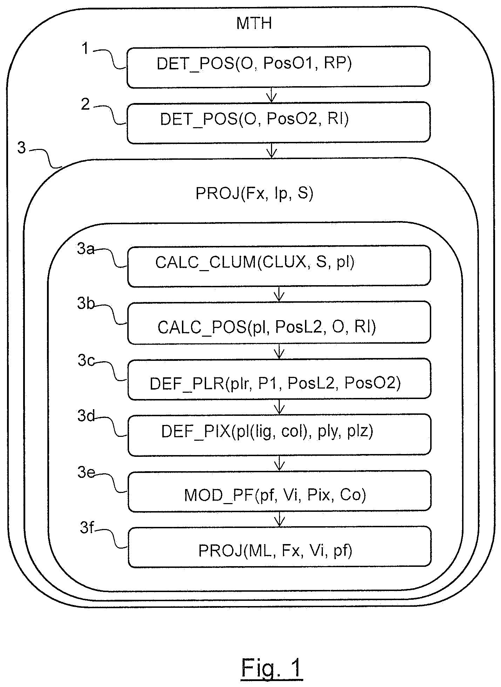

Le procédé de projection MTH pour véhicule automobile d'au moins une image sur une surface de projection au moyen d'un module lumineux ML selon l'invention est décrit en référence aux figures 1 à 16.

Par véhicule automobile, on entend tout type de véhicule motorisé.

Tel qu'illustré sur la figure 1, le procédé MTH comprend les étapes de :

- détecter une position d'observation PosO1 d'un observateur O dans un référentiel module lumineux RP (étape illustrée DET_POS(O, PosO1, RP)) ;
- calculer la position d'observation PosO2 de l'observateur O dans un référentiel image RI (étape illustré DET_PO-S(O, PosO2, RI));
- projeter ladite image Ip sur ladite surface de projection S en fonction de ladite position d'observation PosO2 de l'observateur O dans ledit référentiel image RI, ladite image Ip étant intégrée dans ledit faisceau lumineux Fx du module lumineux ML (étape illustrée PROJ(Fx, Ip, S)).

Tel qu'illustré sur la figure 1, la projection de ladite image Ip comporte les sous-étapes de :

- 3a) à partir d'une carte d'intensité lumineuse CLUX du module lumineux ML comprenant une pluralité d'indicatrices d'intensité pf,
  calculer une cartographie de luminance CLUM sur la surface de projection S résultant en des points de luminance pl (étape illustrée CALC_CLUM(CLUX, S, pl)) ;
- 3b) calculer la position PosL2 de chaque point de luminance pl dans le référentiel image RI (étape illustrée CALC_POS(pl, PosL2, O, RI)) ;
- 3c) à partir de sa position PosL2 et de la position d'observation PosO2 de l'observateur O dans ledit référentiel image RI, définir les coordonnées ply, plz de la projection plr de chaque point de luminance pl dans le plan image P1 de ladite image à projeter Ip (étape illustrée DEF_PLR(plr, P1, PosL2, PosO2)) ;
- 3d) si ladite projection plr appartient à ladite image à projeter Ip, définir des coordonnées lig, col du pixel Pix correspondant (étape illustrée DEF_PIX(pl(lig, col), ply, plz) ;
- 3e) pour chaque projection plr d'un point de luminance pl appartenant à ladite image à projeter Ip, corriger la valeur d'intensité Vi de l'indicatrice d'intensité correspondant pf en fonction de la couleur Co du pixel correspondant Pix (étape illustrée MOD_PF(pf, Vi, Pix, Co)).

A noter que la première étape 3a notamment, de même que l'étape 3b notamment, peuvent être réalisées préalablement aux itérations des étapes suivantes. Plus généralement, les étapes décrites ne sont pas nécessairement réalisées de manière séquentielle, i.e. dans une même boucle d'itération, mais peuvent faire l'objet d'itérations différentes, avec des fréquences d'itérations différentes.

L'étape de projection de l'image Ip comprend en outre une sous-étape 3f) de projeter sur la surface de projection S le faisceau lumineux Fx avec les valeurs d'intensité Vi corrigées des indicatrices d'intensité pf (étape illustrée sur la figure 1 PROJ(ML, Fx, Vi, pf)).

Le procédé de projection MTH est adapté pour projeter une ou plusieurs images Ip en même temps. Dans la suite de la description, la projection d'une seule image est prise comme exemple non limitatif.

On notera que la projection peut se faire à l'avant du véhicule automobile V, à l'arrière ou sur ses côtés.

Le module lumineux ML permet de produire un faisceau lumineux Fx, ledit faisceau lumineux Fx comprenant une pluralité de rayons lumineux Rx qui suivent différentes directions.

Le module lumineux ML permet de modifier la valeur d'intensité Vi de chaque indicatrice d'intensité pf, c'est donc un module lumineux digitalisé. Comme décrit ci-après, on intègre ainsi l'image à projeter Ip dans le faisceau lumineux Fx du module lumineux ML.

On notera que la carte d'intensité lumineuse CLUX est discrétisée pour pouvoir être exploitée numériquement.

Le module lumineux ML est considéré comme une source lumineuse ponctuelle à partir de laquelle on discrétise l'espace autour de ladite source lumineuse. Ainsi, une indicatrice d'intensité pf est un point de l'espace éclairé par le module lumineux ML qui est comporte une certaine direction dir1 et une valeur d'intensité Vi donnée procurée par le module lumineux ML dans ladite direction dir1. La direction dir1 est donnée par deux angles $\theta$ et $\delta$ (décrits plus loin).

Dans un mode de réalisation non limitatif, la surface de projection S est le sol (référencé S1) ou un mur (référencé S2). L'image qui sera projetée Ip sur le sol ou le mur est ainsi une image en 2D.

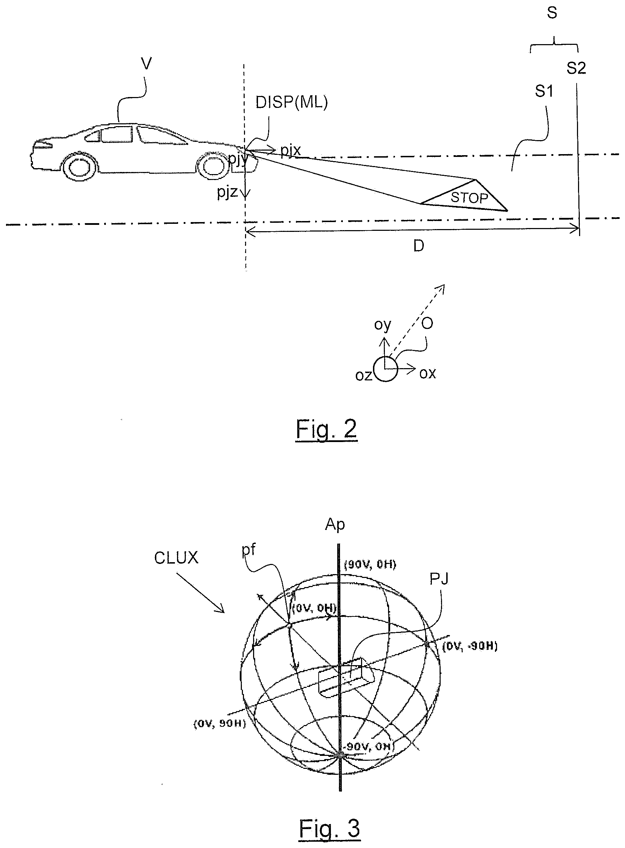

Dans un mode de réalisation non limitatif illustré sur la figure 2, un dispositif d'éclairage DISP du véhicule automobile V comprend au moins un module lumineux ML et est adapté pour mettre en œuvre le procédé de projection MTH. Dans l'exemple non limitatif illustré, le dispositif d'éclairage est un projecteur.

Comme on va le voir ci-après, la position d'observation de l'observateur O est prise en compte pour la projection de l'image à projeter Ip. A cet effet, l'image à projeter Ip sera déformée de sorte qu'elle soit compréhensible par l'observateur en question, que ce soit le conducteur ou un passager avant ou arrière du véhicule automobile ou un observateur extérieur au véhicule automobile.

On se place ainsi du point de vue de l'observateur O pour qui l'on veut projeter l'image Ip. Du point de vue de l'observateur, l'image Ip ne sera pas déformée. D'un point de vue différent dudit observateur, l'image Ip sera déformée.

Dans des exemples de réalisation non limitatifs, un observateur O extérieur au véhicule automobile est un piéton, un conducteur d'un autre véhicule automobile, un cycliste, un motard etc. Il peut se trouver à l'avant, à l'arrière ou sur un des côtés du véhicule automobile V.

Dans un mode de réalisation non limitatif, l'image projetée Ip comprend au moins un symbole graphique. Ce symbole graphique va permettre d'améliorer le confort et/ou la sécurité de l'observateur O. Dans un exemple non limitatif, si l'observateur O est le conducteur du véhicule automobile, le symbole graphique pourra représenter la vitesse limite à ne pas dépasser sur la route, un symbole graphique STOP lorsque le véhicule automobile recule et qu'un obstacle (piéton, mur etc.) se trouve trop près du véhicule automobile, une flèche qui l'aide lorsque le véhicule automobile est sur le point de tourner sur une route etc.

Dans un exemple non limitatif, si l'observateur O est extérieur au véhicule automobile tel qu'un piéton ou un cycliste, le symbole graphique peut être un signal STOP pour lui indiquer qu'il ne doit pas traverser devant le véhicule automobile car ce dernier va redémarrer.

Dans un exemple non limitatif, si l'observateur O est extérieur au véhicule automobile tel qu'un véhicule automobile suiveur, le symbole graphique peut être un signal STOP lorsque le véhicule automobile considéré freine pour que le conducteur du véhicule suiveur freine à son tour. Dans un autre exemple non limitatif, si l'observateur O est extérieur au véhicule automobile et est un véhicule automobile qui dépasse sur le côté, le symbole graphique peut être un symbole d'avertissement pour indiquer audit véhicule automobile de se rabattre car un autre véhicule automobile arrive en face.

Tel qu'illustrée sur la figure 2, l'image projetée Ip est un symbole STOP. Elle est orientée sur la surface de projection S, ici le sol dans l'exemple non limitatif illustré, de telle manière que l'observateur O puisse voir et comprendre ce symbole STOP. Dans l'exemple non limitatif illustré, la projection se fait à l'avant du véhicule automobile V et l'observateur O est extérieur au véhicule automobile V.

Les différentes étapes du procédé de projection MTH sont décrites en détail ci-après.

- 1) Détection de la position d'observation de l'observateur dans le référentiel module lumineux RP

Pour détecter la position d'observation PosO1 de l'observateur O dans le référentiel module lumineux RP, il faut détecter la position de l'observateur O lui-même dans le référentiel module lumineux RP. A cet effet, dans un exemple non limitatif, une caméra (non illustrée) est utilisée. Elle est adaptée pour détecter et calculer la position d'un observateur O qui se trouve à l'extérieur du véhicule automobile V.

Dans des modes de réalisation non limitatifs, la caméra est remplacée par un radar, ou un lidar.

Pour un observateur O qui se trouve à l'intérieur du véhicule automobile (conducteur ou passagers), on considère par exemple des positions d'observation de référence. Ainsi, dans un exemple non limitatif, on considère que l'œil du conducteur se situe à la position PosO1 (1,5 ;-0,5 ; 1) (exprimée en mètre) du module lumineux ML dans le cas d'un véhicule automobile qui est une voiture. Bien entendu, si le véhicule automobile est un camion, la position de l'œil par rapport au module lumineux ML est différente.

Pour un observateur extérieur, à partir de la position dudit observateur O, on peut en déduire sa position d'observation PosO1 qui correspond à la position de son œil. Par exemple, on situe la position de son œil à environ 1,5 mètres par rapport au sol.

Une telle détection de la position de l'observateur étant connue de l'homme du métier, elle n'est pas décrite en détail ici.

- 2) Calcul de la position d'observation de l'observateur dans le référentiel image RI

La position d'observation PosO1 de l'observateur O a été déterminée précédemment selon le référentiel module lumineux RP. Elle va être utilisée pour le changement de repère décrit ci-après.

Cette étape effectue un changement de repère. On passe en effet du référentiel module lumineux RP (défini par les axes pjx, pjy, pjz) au référentiel image RI (défini par les axes lx, ly, Iz) de l'image à projeter Ip.

Le calcul de la position d'observation PosO2 de l'observateur O dans le référentiel image RI est basé sur au moins une matrice de transformation M du référentiel module lumineux RP vers ledit référentiel image RI.

Dans un mode de réalisation non limitatif, la position PosO2 est de la forme :

$$\begin{bmatrix} pjx \\ pjy \\ pjz \\ 1 \end{bmatrix}$$

Dans un mode de réalisation non limitatif, ladite au moins une matrice de transformation M prend en compte au moins un des paramètres suivants :

- la position Poslp de l'image à projeter Ip dans le référentiel module lumineux RP ;
- la rotation Rotlp de l'image à projeter Ip dans le référentiel module lumineux RP ;
- l'échelle de l'image à projeter Ip

La position Poslp de l'image à projeter Ip se déduit du référentiel module lumineux RP selon une translation selon les trois axes pjx, pjy, pjz dudit référentiel module lumineux RP.

Dans un mode de réalisation non limitatif, la matrice de transformation M est de la forme :

$$\begin{bmatrix} a & b & c & t \\ d & e & f & u \\ g & h & i & v \\ 0 & 0 & 0 & 1 \end{bmatrix}$$

où a, e et i sont les termes d'affinité ; b, c, d, f, g et h les termes de rotation ; et t, u et v les termes de translation.

Les termes d'affinité a, e et i permettent de réaliser un agrandissement ou un rétrécissement de l'image Ip, par exemple on augmente la taille globale (homothétie) de 50% ou on la réduit de 20%, en augmentant de 50%, respectivement en réduisant de 20%, les valeurs de a, e et i. A titre d'exemple une valeur de a, e et i égale à 1 correspond à une dimension prédéterminée de référence de l'image projetée, respectivement selon les directions pjx, pjy et pjz. Il est également possible d'appliquer les facteurs d'agrandissement ou de rétrécissement selon une seule des dimensions, ou deux des dimensions (non homothétique). Il est également possible d'appliquer des facteurs d'agrandissement ou de rétrécissement différents sur certaines dimensions par rapport à d'autres, en particulier il est possible d'appliquer des facteurs d'agrandissement ou de rétrécissement différents sur chaque dimension. De cette manière, en fonction de la position PosO2 de l'œil de l'observateur O, on peut décider de projeter une image qui apparaisse à l'observateur O plus ou moins grande globalement ou selon certaines des dimensions, selon que les valeurs de a, e et i augmentent ou diminuent respectivement.

On notera que la rotation Rotlp dépend de trois angles qui sont les suivants:

- β : azimut (qui indique si l'image à projeter se situe à droite ou à gauche de l'observateur, par exemple lorsque ce dernier regarde à droite ou à gauche) ;
- Ω : devers (qui indique l'inclinaison de l'image à projeter Ip, par exemple lorsque l'observateur incline la tête sur le côté. Cela revient à pencher l'image Ip) ;
- ε : site (qui indique l'effet que l'on veut donner au symbole graphique de l'image Ip).

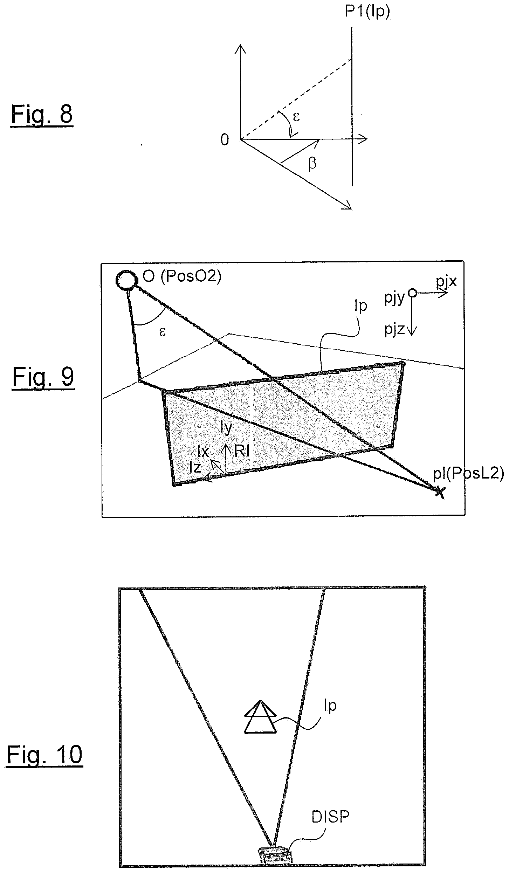

La figure 8 illustre les angles site, et azimut et le plan P1 de l'image à projeter Ip.

On a ainsi PosO2=M*PosO1.

PosO1 est la position d'observation de l'observateur O utilisée pour la projection de l'image Ip dans le référentiel module lumineux RP.

PosO2 est la position d'observation de l'observateur O utilisée pour la projection de l'image Ip dans le référentiel image RI.

Ainsi, la position et la rotation de l'image à projeter Ip sont adaptées en fonction de l'observateur O. De cette manière, l'image à projeter Ip va être compréhensible par l'observateur O. On obtient ainsi une déformation affine de l'image du point de vue que l'on désire, appelée anamorphose.

Ainsi, pour l'œil d'un conducteur d'une voiture, l'image projetée Ip n'est pas déformée. De la même manière, pour l'œil d'un conducteur d'un camion, bien qu'il soit positionné bien au dessus du référentiel module lumineux RP, l'image projetée Ip n'est pas non plus déformée. Enfin, pour un observateur extérieur, l'image projetée Ip n'est pas non plus déformée.

On notera que l'image projetée Ip peut ainsi être bien visible de l'observateur puisque sa projection dépend de la position d'observation de l'observateur O et que l'on peut moduler son échelle comme on veut. Ainsi, même s'il est loin du véhicule automobile, l'observateur O pourra toujours comprendre et voir le(s) symbole(s) graphique(s) de l'image projetée Ip.

- 3) Projection de l'image Ip sur la surface de projection
Cette étape comprend les sons-étapes suivantes :

  - 3a) Calcul d'une cartographie de luminance CLUM

Dans un mode de réalisation non limitatif, la carte d'intensité lumineuse CLUX est stockée dans une mémoire. Elle aura préalablement était établie lors de la conception du produit, au moyen d'un goniophotomètre (non illustré). Le goniophotomètre est par exemple de type A, c'est-à-dire que le mouvement de rotation autour de l'axe horizontal supporte le mouvement de rotation autour de l'axe vertical ajusté de la rotation autour de l'axe horizontal. La carte d'intensité lumineuse CLUX donne les indicatrices d'intensité pf du module lumineux ML considéré comme une source lumineuse ponctuelle. La direction dir1 d'un rayon lumineux Rx partant du module lumineux ML est exprimée en fonction de deux angles $\theta$ et $\delta$ et est donnée par la formule suivante :

$$direction = \begin{pmatrix} \cos\theta * \cos\delta \\ \sin\theta \\ \cos\theta * \sin\delta \end{pmatrix}$$

Avec $\delta$ la rotation verticale V du goniophotomètre; et $\theta$ la rotation horizontale H du goniophotomètre.

La carte d'intensité lumineuse CLUX comprend ainsi une pluralité d'indicatrices d'intensité pf dont la direction dir1 est donnée par la formule ci-dessus, avec $\theta$ l'angle horizontal de l'indicatrice d'intensité pf, et $\delta$ l'angle vertical de l'indicatrice d'intensité pf. La carte d'intensité lumineuse CLUX est représentée sur la figure 3. On peut y voir une indicatrice d'intensité pf de coordonnées polaires $\delta$=0V, $\theta$=0H. La carte d'intensité lumineuse CLUX permet ainsi de déterminer une intensité I($\theta,\delta$) pour une direction donnée.

On a ainsi :

$$CLUX = \{(\delta_i, \theta_j, I_{i,j}),(i, j)\in[1,M]x[1,N]\},$$

, où M et N sont les nombres de points de discrétisation (ou indicatrices d'intensité) du faisceau lumineux Fx suivant les directions (respectivement) verticale et horizontale.

Une indicatrice d'intensité pf est donc définie par sa direction dir1 et son intensité I($\theta,\delta$).

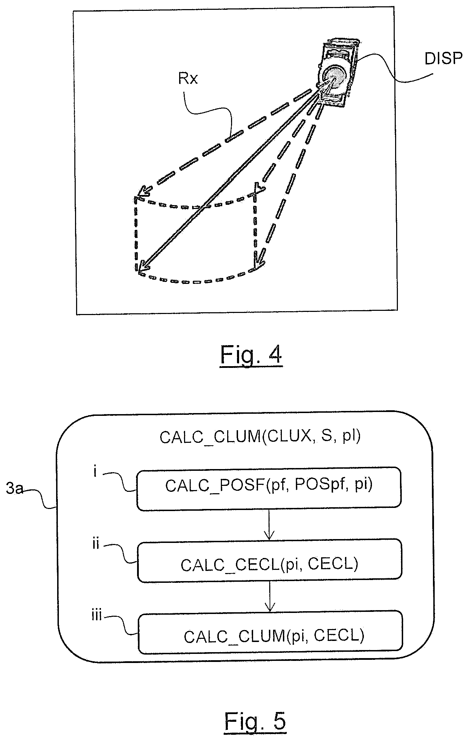

La figure 4 illustre un dispositif d'éclairage DISP comprenant un module lumineux ML avec la direction d'un rayon lumineux Fx.

Le calcul de la cartographie de luminance CLUM sur la surface de projection S comprend les sous-étapes suivantes illustrées sur la figure 5.

- i) un premier calcul de la position POSpf desdites indicatrices d'intensité pf sur la surface de projection S résultant en des points d'impact pi (étape illustrée CALC_POSF(pf, POSpf, pi));
- ii) un deuxième calcul d'une cartographie d'éclairement CECL desdits points d'impact pi (étape illustrée CALC_CECL(pi, CECL)) ;
- iii) un troisième calcul de la cartographie de luminance CLUM desdits points d'impacts pi à partir de la cartographie d'éclairement CECL résultant en lesdits points de luminance pl (étape illustrée CALC_CLUM(pi, CECL)).

Les différentes sous-étapes sont détaillées ci-après.

On notera que les calculs ci-après sont effectués en fonction de la surface de projection S (sol S1 ou mur S2).

o sous-étape i)

Le premier calcul est basé sur :

- la position POSpj du module lumineux ML dans le repère cartésien x, y, z ; et
- la direction dir1 desdites indicatrices d'intensité pf décrite précédemment.

Pour le sol S1, on obtient ainsi la position POSpf1 de l'indicatrice d'intensité pf sur le sol dans le repère cartésien x, y, z avec la formule suivante.

$$POSpf1 = POSpj - (POSpj.z/dir1.z)^*dir1.$$

Avec POSpj.z, la valeur z de la position du module lumineux ML (hauteur du module lumineux au dessus du sol) et dir1.z, la valeur z du vecteur directeur du rayon lumineux Rx.
Pour le mur S2, on obtient ainsi la position POSpf2 de l'indicatrice d'intensité pf sur le mur dans le repère cartésien x, y, z avec la formule suivante.

$$POSpf2 = POSpj - (D/dir1.x)^*dir1.$$

Avec

- dir1.x, la valeur x du vecteur directeur du rayon lumineux Rx ;
- D, la distance entre le module lumineux ML et le mur. Dans un exemple non limitatif, D est égal à 25mètres.

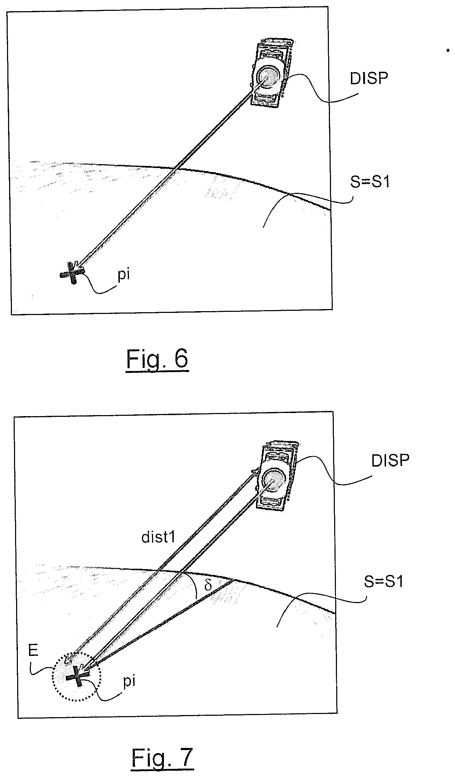

On obtient ainsi un point d'impact pi (en position POSpf1 ou POSpf2) sur le sol S1 ou sur le mur S2. La figure 6 illustre un exemple non limitatif de point d'impact pi sur une surface de projection S qui est le sol S1.

o sous-étape ii)

Une fois le point d'impact pi sur le sol S1 ou sur le mur S2 déterminé, on calcule l'éclairement E de ce point d'impact pi à partir de l'intensité $I(\theta,\delta)$ de l'indicatrice d'intensité pf déterminée précédemment.
Pour le sol S1, on obtient ainsi l'éclairement $E_R$ du point d'impact pi sur le sol avec la formule suivante.

$$E_R = -(I(\theta,\delta)/dist1^2)^*cos\theta^*sin\delta$$

Avec dist1, la distance entre le point d'impact pi et le module lumineux ML.
Pour le mur S2, on obtient ainsi l'éclairement $E_M$ du point d'impact pi sur le mur avec la formule suivante.

$$E_M = (I(\theta,\delta)/dist1^2)^*cos\theta^*cos\delta$$

Avec dist1, la distance entre le point d'impact pi et le module lumineux ML.
La figure 7 illustre l'éclairement E (délimité par un cercle en pointillés) d'un point d'impact pi sur une surface de projection S qui est le sol S1.

o sous-étape iii)

Le troisième calcul est basé sur :

- l'éclairement E desdits points d'impacts pi ;
- un vecteur de position Roeil/Moeil entre la position d'un point d'impact pi de la cartographie d'éclairement CECL et la position d'observation PosO1 de l'observateur O (dans le référentiel module lumineux RP) ; et

- une fonction de diffusion de la lumière d.

d est une fonction connue qui permet de calculer la diffusion de la lumière par la surface de projection S. On notera qu'elle varie en fonction de la nature de la surface de projection S. Par exemple, la fonction d est différente si la surface est de l'asphalte, du béton, du goudron, des pavés etc.

Pour le sol S1, on obtient ainsi la luminance $L_R$ du point d'impact pi sur le sol avec la formule suivante.

$$L_R = E_R \frac{d\left(arcos\left(\frac{R_{oeil}}{\|R_{oeil}\|} \cdot z\right)\right)}{\frac{R_{oeil}}{\|R_{oeil}\|} \cdot z}$$

Avec $\frac{Roeil}{\|Roeil\|} \cdot z$ la valeur z du vecteur Roeil normé.

Pour le mur S2, on obtient ainsi la luminance $L_M$ du point d'impact pi sur le mur avec la formule suivante.

$$L_M = E_M \frac{d\left(arcos\left(\frac{M_{oeil}}{\|M_{oeil}\|} \cdot x\right)\right)}{\frac{M_{oeil}}{\|M_{oeil}\|} \cdot x}$$

Avec $\frac{Moeil}{\|Moeil\|} \cdot x$ la valeur x du vecteur Moeil normé.

Dans un mode de réalisation non limitatif, on part de l'hypothèse que la surface de projection S émet de manière uniforme dans toutes les directions.

Dans ce cas, le paramètre de diffusion d ne dépend pas des angles $\delta$ et $\theta$.

Dans un mode de réalisation non limitatif, la surface de projection S est considérée un diffuseur lambertien (par exemple un corps gris). On a alors une luminance constante sur la surface de projection S proportionnelle à l'éclairement E et dans ce cas la fonction de diffusion d est un cosinus.

Dans ce cas, $L_R = a/\pi\, E_R$ car

$$L_R = E_R \frac{\frac{a}{\pi} \cdot cos\left(acos \frac{\vec{R}_{oeil} \cdot \vec{z}}{\|\vec{R}_{oeil}\|}\right)}{\frac{\vec{R}_{oeil} \cdot \vec{z}}{\|\vec{R}_{oeil}\|}} = \frac{a}{\pi}\, E_R$$

où a est l'albédo du matériau.
et $L_M = a/\pi\, E_M$

Dans des exemples non limitatifs, l'albédo de l'asphalte est de 7%, et celui du béton varie entre 17% à 27%.

- 3b)Calcul des positions des points de luminance pl dans le référentiel image RI

La position PosL1 d'un point de luminance pl a été déterminée précédemment selon le référentiel module lumineux RP. Elle va être utilisée pour le changement de repère décrit ci-après.

De la même manière que pour le calcul de la position d'observation PosO2 de l'observateur O, cette étape effectue un changement de repère. On passe en effet du référentiel module lumineux RP (défini par les axes pjx, pjy, pjz) au référentiel image RI (défini par les axes Ix, Iy, Iz) de l'image à projeter Ip.

Le calcul de la position PosL2 d'un point de luminance pl dans le référentiel image RI est basé sur ladite au moins une matrice de transformation M du référentiel module lumineux RP vers ledit référentiel image RI (matrice de transformation M décrite précédemment).

Dans un mode de réalisation non limitatif, la position PosL2 est de la même forme que la position PosO2 décrite précédemment :

$$\begin{bmatrix} pjx \\ pjy \\ pjz \\ 1 \end{bmatrix}$$

On notera que la matrice de transformation M a été décrite lors du calcul de la position d'observation PosO2 de l'observateur O dans le référentiel image RI. Elle n'est donc pas détaillée de nouveau ici.

On a ainsi PosL2=M*PosL1.

PosL1 est la position du point de luminance pl dans le référentiel module lumineux RP.

PosL2 est la position du point de luminance pl dans le référentiel image RI.

La figure 9 illustre l'image à projeter Ip ainsi que le référentiel image RI. On peut également voir le point de luminance pl et l'œil de l'observateur O (qui correspond à la position d'observation) avec leur position respective PosL2 et PosO2 définies dans le référentiel image RI.

On notera que bien que l'image projetée Ip sur le sol ou le mur est en 2D, (deux dimensions), on peut obtenir un effet 3D (trois dimension), c'est-à-dire un effet de perspective ou de trompe l'œil, en réglant l'angle site ε vu précédemment. L'observateur O (que ce soit le conducteur, un passager, ou un observateur extérieur) va voir l'image en perspective. A cet effet, l'angle site ε est supérieur à -90°.

En particulier, il est supérieur à -90° et inférieur ou égal à 0°. L'effet 3D est ainsi visible entre 0 et jusqu'à -90° (non inclus).

On notera qu'à -90° l'image IP est plaquée au sol et est donc sans effet 3D.

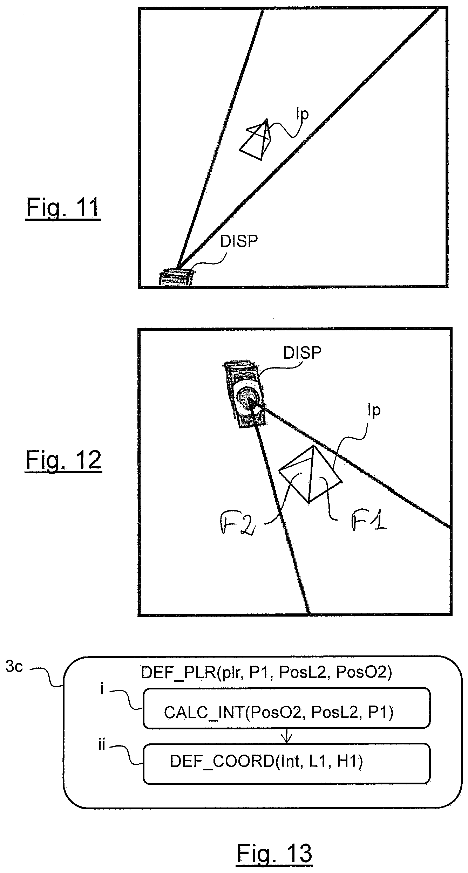

Les figures 10 à 12 illustrent une image projetée Ip qui est une pyramide. Un observateur O qui est extérieur au véhicule automobile, tel qu'un piéton, est pris comme exemple non limitatif. La pyramide est visible selon trois points de vue particuliers, le point de vue du conducteur (figure 10), le point de vue d'un passager arrière (figure 11) et le point de vue du piéton (figure 12), mais n'est vue en en effet 3D que d'un seul point de vue. Dans l'exemple non limitatif illustré, seul le piéton va voir la pyramide en 3D (comme illustrée sur la figure 12). Du point de vue du conducteur ou du passager, la pyramide apparaît déformée.

Dans une variante de réalisation non limitative, l'angle site ε est égal à 0. L'observateur O regarde droit devant lui. Dans ce cas, l'observateur O va voir l'image, à savoir ici la pyramide, comme si elle était debout.

Dans une variante de réalisation non limitative, l'angle site ε est sensiblement égal à -35°. Cela permet d'avoir un effet 3D relevé dans le sens de la route.

Le plan P1 de l'image Ip est ainsi perpendiculaire à la direction d'observation de l'observateur O.

Si l'angle site ε est différent de -90°, la pyramide sera ainsi visible en 3D mais plus ou moins inclinée.

- 3c) définir les coordonnées ply, plz de la projection plr d'un point de luminance pl

Tel qu'illustré sur la figure 13, dans un mode de réalisation non limitatif, la définition des coordonnées ply, plz d'une projection plr d'un point de luminance pl comprend les sous-étapes de :

- i) calculer le point d'intersection Int entre (sous-étape illustrée CALC_INT(PosO2, PosL2, P1)) :

- la droite V(PosO2, PosL2) passant par la position d'observation PosO2 dans ledit référentiel image RI de l'observateur O et par la position PosL2 dans ledit référentiel image RI dudit point de luminance pl; et
- le plan image P1 de l'image à projeter Ip.

- ii) déterminer les coordonnées ply, plz dudit point d'intersection Int à partir des dimensions L1, H1 de ladite image à projeter Ip (sous-étape illustrée DEF_COORD(Int, L1, H1).

Ces deux sous-étapes sont décrites ci-après.

o sous-étape i)

Dans le référentiel image RI, le point d'intersection Int entre la droite (œil, point de luminance) et le plan image P1 est le point de la droite (œil, point de luminance) pour lequel lx = 0. On a ainsi :

$$Int = PosO2-((PosO2.x)/(V(PosO2, PosL2).x))* V(PosO2, PosL2)$$

Avec

- $V(PosO2, posL2)$ le vecteur représentant la droite (œil, point de luminance) dans le référentiel image RI ;
- $V(PosO2, posL2).x$ la valeur x du vecteur ;
- Int le point d'intersection entre la droite (œil, pl) et l'image à projeter Ip dans le référentiel image RI. Le point d'intersection Int est ainsi la projection plr du point de luminance pl sur le plan image P1 de l'image à projeter Ip ;
- $PosL2.x$ la valeur x de la position du point de luminance pl ;
- $PosO2.x$ la valeur x de la position d'observation de l'observateur.

On notera que l'on prend comme hypothèse que la position d'observation de l'observateur O est placé sur l'axe lx .

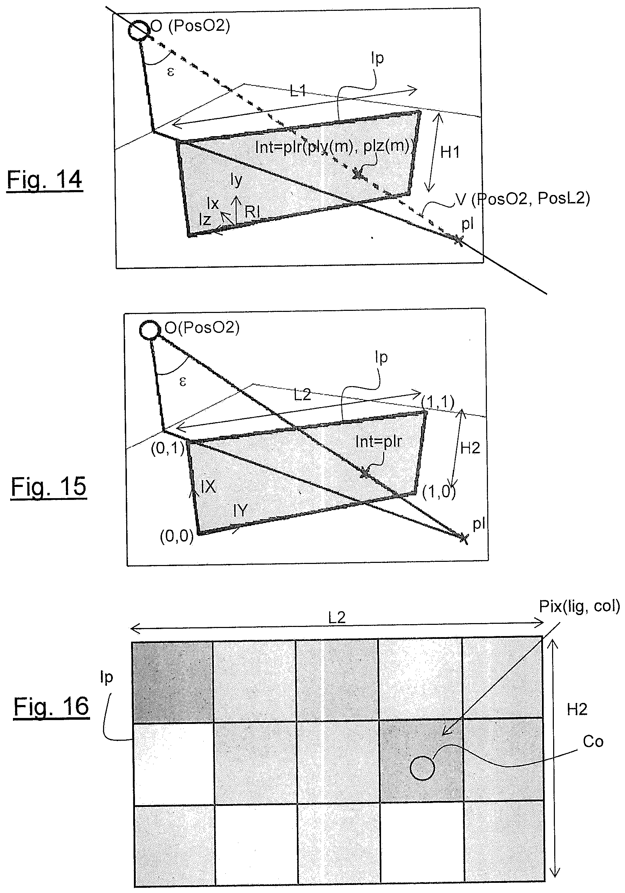

La figure 14 illustre l'image à projeter Ip, le point d'intersection Int qui correspond à la projection plr du point de luminance pl sur ledit plan P1 et le vecteur V(posO2, posL2) (illustré en pointillés). On notera que la projection plr est de type centrale, de façon à produire un effet de perspective conique. Par la suite on utilisera indifféremment le terme projection plr ou projection centrale plr.

o sous-étape ii)

Les coordonnées ply, plz de la projection centrale plr du point de luminance pl dans le repère image RI correspondent aux coordonnées selon l'axe ly (vertical) et selon l'axe lz (horizontal) de la position du point d'intersection Int déterminé précédemment. Dans un mode de réalisation non limitatif, elles sont exprimées en mètre.

On en déduit les coordonnées de ce point dans le repère de la figure 14 par les formules suivantes :

$$ply= (Int.y+(L1/2))/L1$$

$$plz= Int.z/H1$$

Avec,

- L1 la largeur de l'image à projeter Ip (exprimée en mètre dans un exemple non limitatif) ;
- H1 la hauteur de l'image à projeter Ip (exprimée en mètre dans un exemple non limitatif) ;
- $Int.y$ la valeur y du point d'intersection ;
- $Int.z$ la valeur z du point d'intersection.

La figure 14 illustre la définition des coordonnées ply et plz en mètres dans le référentiel image RI.

On notera que L1 et H1 sont des paramètres d'entrée du procédé de projection MTH.

Cette sous-étape permet de déterminer par la suite si les coordonnées ply, plz appartiennent à l'image à projeter Ip (elles doivent alors être comprises entre 0 et 1) et donc si la projection centrale plr du point de luminance pl appartient à l'image à projeter Ip.

A cet effet, dans un mode de réalisation non limitatif, on normalise l'image à projeter Ip et les coordonnées de la projection plr ainsi calculées. Cela permet de simplifier le test d'appartenance à l'image à projeter Ip.

On obtient ainsi un repère normé IX (axe vertical), IY (axe horizontal) tel qu'illustré sur la figure 15. La valeur des coordonnées ply, plz de la projection plr est maintenant comprise entre 0 et1. Dans l'exemple illustré, les axes ly et lz qui sont devenus respectivement les axes IX et -IY. On obtient ainsi des dimensions d'image H2, L2 comprises entre 0 et 1.

La figure 15 illustre la définition des coordonnées ply et plz en valeurs sans unité dans le référentiel image RI.

On notera que la taille (L1, H1) de l'image à projeter Ip peut être définie dans cette étape 3c) ou dans l'étape avec la matrice de transformation M.

Etant donné que les dimensions L1 et H1 et donc L2, H2, la position et la rotation de l'image à projeter Ip sont connues (ce sont des paramètres d'entrée du procédé de projection MTH), on peut facilement déterminer, via ses coordonnées ply, plz, si la projection pl appartient ou non à l'image à projeter Ip.

• 3d) Définir les coordonnées du pixel Pix correspondant

La définition des coordonnées ligne (lig), colonne (col) du pixel Pix est effectué pour chaque projection plr (de point de luminance pl) qui appartient à l'image à projeter Ip, à savoir qui est située à l'intérieur du rectangle L2*H2 de l'image à projeter Ip, ce qui a été vérifié à l'étape 3c-ii).

Ainsi, si la projection plr appartient à l'image à projeter Ip, les coordonnées du pixel Pix correspondant sont calculées. Elles sont calculées comme suit.

$$Lig = - plz*L2$$

$$Col = ply*H2$$

Avec,

- lig, la ligne du pixel ;
- col, la colonne du pixel ;
- L2 la largeur de l'image à projeter Ip (cette fois-ci exprimée en pixels) ;
- H2 la hauteur de l'image à projeter Ip (cette fois-ci exprimée en pixels) ;
- ply la coordonnée de la projection plr selon l'axe IX ;
- plz la coordonnée de la projection plr selon l'axe IY.

• 3e) Correction de la valeur d'intensité de l'indicatrice d'intensité pf correspondant

Avec les coordonnées lig, col du pixel Pix, on peut récupérer la valeur de sa couleur Co dans l'image que l'on veut projeter.

Dans un exemple non limitatif, la valeur est comprise entre 0 et 255. On peut ainsi aller du blanc au noir en passant par plusieurs nuances de gris comme illustré sur la figure 16. Par le terme blanc il faut comprendre une couleur quelconque unique et par l'expression de nuances de gris il faut comprendre les nuances obtenues de ladite couleur unique entre sa nuance la plus claire et le noir. Ainsi l'image projetée n'est pas forcément composée de la couleur blanche et des nuances de gris associées aux valeurs de Co comprise entre 0 et 255, mais des nuances plus ou moins sombres d'une couleur quelconque visible par l'œil humain. Avantageusement il s'agit de blanc, de jaune, de bleu, de rouge ou d'ambre.

On corrige alors la valeur d'intensité Vi de l'indicatrice d'intensité pf correspondant.

On notera que cela est possible car le module lumineux ML est digitalisé.

Dans un premier mode de réalisation non limitatif, la correction s'effectue comme suit :

$$Vi = \sigma . Vi0*Co/255.$$

Avec :

- Vi0 la valeur d'intensité initiale de l'indicatrice d'intensité pf du module lumineux,
- Co la couleur du pixel Pix correspondant ; et
- σ un facteur de surintensification maximale.

Dans un deuxième mode de réalisation non limitatif, la correction s'effectue comme suit :

$$Vi = \varphi . Co,$$

, avec $\varphi$ un coefficient de luminance. On effectue ainsi une substitution des luminances. Cela permet d'afficher l'image sur un fond indépendant de la distribution de lumière de base.

Cette étape est effectuée pour tous les points de luminance pl dont la projection centrale plr appartient au rectangle L2*H2 de l'image à projeter Ip.

Ainsi, le module lumineux ML peut projeter sur la surface de projection S le faisceau lumineux Fx comprenant les rayons lumineux Rx avec les valeurs d'intensité Vi corrigées des indicatrices d'intensité (étape 3f) illustrée sur la figure 1 PROJ(ML, Fx, pf, Vi). Cela permet d'afficher la bonne couleur Co pour l'indicatrice d'intensité considérée. De cette manière, l'image à projeter Ip est intégrée dans le faisceau lumineux Fx du module lumineux ML (puisqu'elle est produite par ledit module lumineux ML lui-même) et est projetée sur la surface de projection S avec les bonnes couleurs.

Ainsi, en fonction de la couleur Co désirée d'un pixel Pix, on applique un facteur de correction déterminé à la valeur d'intensité Vi de l'indicatrice d'intensité pf correspondant. Ainsi, on peut obtenir des indicatrices d'intensité dont la couleur ne dépend pas de l'intensité lumineuse du faisceau lumineux Fx lui-même. Par exemple, la pyramide projetée illustrée est de couleur homogène.

Dans le cas d'une source lumineuse indépendante du module lumineux ML qui projetterait ladite pyramide en surimposition sur ledit faisceau lumineux, cela ne serait pas le cas. Les pixels de l'image seraient plus ou moins éclairés en fonction de la répartition de l'intensité lumineuse dudit faisceau lumineux. Leur couleur varierait ainsi en fonction de l'intensité lumineuse dudit faisceau lumineux.

Par ailleurs, le fait que l'image à projeter Ip soit intégrée dans ledit faisceau lumineux Fx et non pas en surimposition permet d'obtenir un meilleur contraste de l'image sur la surface de projection S que dans le cas d'une utilisation d'une source lumineuse indépendante. Dans le cas d'une source lumineuse indépendante, le faisceau lumineux éclaire également l'image projetée. Cette dernière est par conséquent plus claire au niveau des couleurs.

Il est à noter que la valeur de couleur Co d'un pixel, ou d'une série de pixels correspondant à des parties prédéterminées de l'image projetée, peut aussi être utilisée pour renforcer l'effet 3D. Par exemple, en référence à la figure 12, les pixels correspondant à la face F1 du motif de l'image projetée et ceux correspondant à la face F2 du motif de l'image projetée, peuvent comporter des valeurs de couleur Co spécifiques et différentes. Ainsi la face F1 parait plus lumineuse que la face F2 ou inversement selon que la valeur de la couleur Co correspondant aux pixels composant la face F1 est supérieur ou inférieure à celle correspondant aux pixels composant la face F2. La valeur de la couleur Co correspondant aux pixels composant la face F1 et/ou F2 peut également varier de sorte à faire un effet de dégradé, par exemple d'un bord à l'autre de la face F1 et/ou F2, permettant de renforcer encore plus l'effet 3D.

Il est possible d'obtenir des images multicolores en utilisant plusieurs systèmes fonctionnant selon le procédé décrit ci-dessus et émettant chacun une couleur visuellement différente. Les images projetées par chaque système sont alors calculées pour se projeter sur la surface de projection S de manière superposée afin obtenir une image projetée globale multicolore.

On notera que comme la projection de l'image à projeter Ip dépend de la position d'observation de l'observateur O, elle est donc continuellement mise à jour en fonction du déplacement de l'observateur O par rapport au véhicule automobile lorsque ce dernier est à l'extérieur du véhicule automobile et en fonction du déplacement du véhicule automobile lui-même lorsque l'observateur O est à l'intérieur du véhicule automobile.. Dans un mode de réalisation non limitatif, la fréquence de rafraichissement des calculs présentés ci-dessus est ainsi fonction de la vitesse de déplacement de l'observateur par rapport au véhicule automobile pour le cas d'un observateur extérieur. Plus la vitesse augmente, plus la fréquence de rafraichissement augmente. Plus la vitesse diminue, plus la fréquence de rafraichissement diminue.

Dans un autre mode de réalisation non limitatif, la fréquence de rafraichissement des calculs présentés ci-dessus est constante. Dans un exemple non limitatif, la fréquence est d'une seconde.

Ainsi, ces calculs étant effectués en temps réel, il n'est pas nécessaire d'avoir une base de données avec des images d'un même symbole graphique pré-chargées en mémoire correspondant à plusieurs positions d'observation imaginables de l'observateur par rapport au véhicule automobile (lorsqu'il est à l'extérieur), ou dans le véhicule automobile (lorsqu'il est à l'intérieur).

Le procédé de projection MTH permet ainsi de projeter une ou plusieurs images Ip sur une surface de projection S qui est non seulement visible par un observateur situé à l'intérieur ou à l'extérieur du véhicule automobile mais également compréhensible par lui puisque l'image projetée Ip est orientée dans la direction du regard dudit observateur O.

On notera que dans le cas le cas où on projette plusieurs images Ip en même temps, on calcule la combinaison des différentes images avec le faisceau lumineux Fx avant de projeter le résultat global.

Dans un mode de réalisation non limitatif, le procédé de projection MTH est mis en œuvre par un dispositif d'éclairage DISP pour véhicule automobile V.

Dans un mode de réalisation non limitatif, le dispositif d'éclairage DISP permet la réalisation d'une fonction photométrique réglementaire telle qu'un feu de croisement, feu de route ou une fonction de signalisation avant, arrière et/ou latérale. Ainsi, le dispositif d'éclairage se situe à l'avant du véhicule automobile ou à l'arrière.

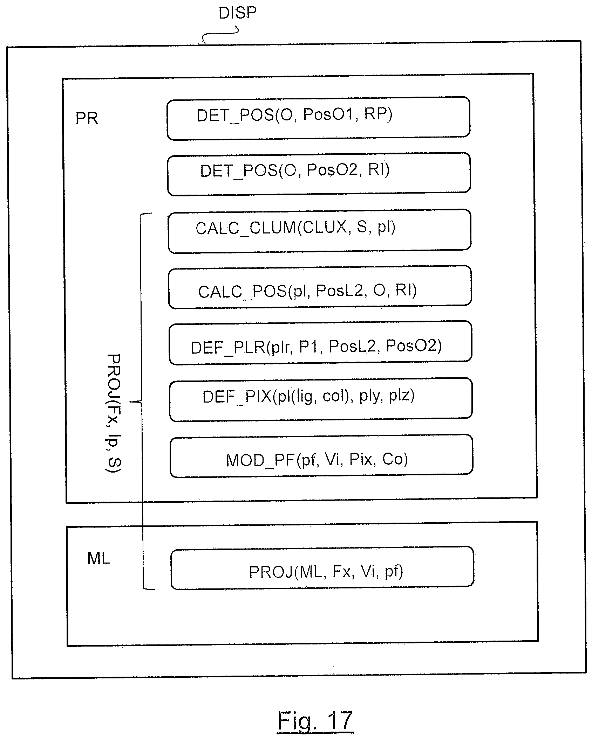

Le dispositif d'éclairage DISP est illustré à la figure 17. Il comprend une unité de traitement PR et au moins un module lumineux ML. Dans des modes de réalisation non limitatifs, le dispositif d'éclairage est un projecteur ou un feu arrière.

L'unité de traitement PR est adaptée pour :

- détecter une position d'observation PosO1 d'un observateur O dans un référentiel module lumineux RP (fonction illustrée DET_POS(O, PosO1, RP)) ;
- calculer la position d'observation PosO2 de l'œil de l'observateur O dans un référentiel image RI (fonction illustrée DET_POS(O, PosO2, RI)) ;

Ledit dispositif d'éclairage DISP est adapté pour projeter ladite image Ip sur ladite surface de projection S en fonction de ladite position d'observation PosO2 de l'observateur O dans le référentiel image RI, ladite image Ip étant intégrée dans ledit faisceau lumineux Fx du module lumineux ML (fonction illustrée PROJ(Fx, Ip, S).

Pour la projection de ladite image Ip sur ladite surface de projection S, l'unité de traitement PR est en outre adaptée pour :

- à partir d'une carte d'intensité lumineuse CLUX du module lumineux ML comprenant une pluralité d'indicatrices d'intensité pf, calculer une cartographie de luminance CLUM sur la surface de projection S résultant en des points de luminance pl (fonction illustrée CALC_CLUM(CLUX, S, pl));
- calculer la position PosL2 de chaque point de luminance pl dans le référentiel image RI (fonction illustrée CALC_POS(pl, PosL2, O, RI));
- à partir de sa position PosL2 et de la position d'observation PosO2 de l'observateur O dans ledit référentiel image RI, définir les coordonnées ply, plz de la projection plr de chaque point de luminance pl sur le plan image P1 de ladite image à projeter Ip (fonction illustrée DEF_PLR(plr, P1, PosL2, PosO2));
- si ladite projection plr appartient à ladite image à projeter Ip, définir des coordonnées lig, col du pixel Pix correspondant (fonction illustrée DEF_PIX(pl(lig, col), ply, plz));
- pour chaque projection plr d'un point de luminance pl appartenant à ladite image à projeter Ip, corriger la valeur d'intensité Vi de l'indicatrice d'intensité correspondant pf en fonction de la couleur Co du pixel correspondant Pix (fonction illustrée MOD_PF(pf, Vi, Pix, Co));

Pour la projection de ladite image Ip sur la surface de projection S, le module lumineux ML est adapté pour projeter sur la surface de projection S le faisceau lumineux Fx avec les valeurs d'intensité VI corrigées des indicatrices d'intensité pf (fonction illustrée PROJ(ML, Fx, Vi, pf)).

On notera que l'unité de traitement PR est intégrée dans le module lumineux ML ou est indépendante dudit module lumineux ML.

Bien entendu la description de l'invention n'est pas limitée aux modes de réalisation décrits ci-dessus.

Ainsi, dans un autre mode de réalisation non limitatif, un goniophotomètre de type B peut être également utilisé, c'est-à-dire que le mouvement de rotation autour de l'axe vertical supporte le mouvement de rotation autour de l'axe horizontal.

Ainsi, dans un autre mode de réalisation non limitatif, l'unité de traitement PR être déportée par rapport au dispositif d'éclairage DISP.

Ainsi, l'étape de calcul de la position d'observation PosO2 dans le référentiel image RI peut être effectuée avant ou en même temps que le calcul de la position de luminance PosL2.

Ainsi, le véhicule automobile V comprend un ou plusieurs dispositifs d'éclairage DISP adaptés pour mettre en œuvre le procédé de projection MTH décrit.

Ainsi, l'invention décrite présente notamment les avantages suivants :

- elle permet de projeter une image comprenant au moins un symbole graphique qui permet d'améliorer le confort et/ou la sécurité d'un observateur qui est à l'intérieur ou à l'extérieur du véhicule automobile ;
- elle permet de projeter une image qui est visible et compréhensible par un observateur déterminé car ladite projection dépend de la position dudit observateur; On applique ainsi le même procédé de projection pour projeter une image compréhensible par le conducteur ou pour projeter une image compréhensible par le piéton ou encore par un conducteur d'un véhicule suiveur par exemple ; elle permet de déformer l'image à projeter Ip pour qu'elle soit compréhensible par un observateur déterminé. On crée ainsi une anamorphose d'une image, ladite anamorphose étant dépendante de la position d'observation de l'observateur O ;
- la position d'observation de l'observateur dans le référentiel image est fonction de la position et de la rotation de ladite image à projeter. Grâce à la rotation qui dépend notamment d'un angle site, lorsque ce dernier est réglé de façon particulière, l'observateur a l'impression de voir une image en 3D ;

- elle permet d'intégrer l'information à projeter au faisceau d'éclairage Fx du module lumineux ML du véhicule automobile. Il n'est pas nécessaire d'avoir une source lumineuse supplémentaire dédiée ;
- ainsi, contrairement à un état de la technique antérieur qui affiche une image directement sur la vitre du feu arrière du véhicule automobile et qui peut apparaître trop petite à une certaine distance, l'invention permet à un observateur extérieur qui se trouve à une certaine distance dudit véhicule automobile de bien voir l'image puisque cette dernière est projetée en fonction de la position même de l'observateur et sur une surface de projection qui n'est pas la vitre d'un feu du véhicule automobile. Les dimensions de l'image à projeter Ip ne sont plus limitées à la petite surface de projection telle que la vitre du feu ;
- elle permet de proposer une solution qui peut être utilisée pour un destinataire de l'information qui ne peut voir que l'avant ou les côtés du véhicule automobile par exemple, contrairement à une solution qui affiche une image sur les feux arrières du véhicule automobile ;
- elle permet de proposer une autre solution qu'un affichage d'image(s) sur les feux arrières du véhicule automobile ;
- elle permet de proposer une autre solution qu'une projection d'image(s) uniquement dédiée(s) au conducteur du véhicule automobile.

**Revendications**

1. Procédé de projection (MTH) pour véhicule automobile (V) d'au moins une image (Ip) sur une surface de projection (S) au moyen d'un module lumineux (ML) d'un véhicule automobile adapté pour projeter un faisceau lumineux (Fx), ledit procédé de projection (MTH) comprenant les étapes suivantes:

   - détecter une position d'observation (PosO1) d'un observateur (O) dans un référentiel module lumineux (RP), ladite étape consistant à considérer que :

      - lorsque l'observateur (O) se trouve à l'intérieur du véhicule automobile, la position d'observation se situe au niveau de l'œil du conducteur ;
      - lorsque l'observateur (O) se trouve à l'extérieur du véhicule automobile, dit observateur extérieur, la position d'observation se situe au niveau de l'œil dudit observateur extérieur ;

   - calculer la position d'observation (PosO2) de l'observateur (O) dans un référentiel image (RI) ;
   - projeter ladite image (Ip) sur ladite surface de projection (S) en fonction de ladite position d'observation (PosO2) de l'observateur (O) dans ledit référentiel image (RI), ladite image (Ip) étant intégrée dans ledit faisceau lumineux (Fx) du module lumineux (ML),
   **caractérisé en ce que** la projection de ladite image (Ip) comporte les sous-étapes de :

      - à partir d'une carte d'intensité lumineuse (CLUX) du faisceau lumineux (Fx) du module lumineux (ML) comprenant une pluralité d'indicatrices d'intensité (pf), calculer une cartographie de luminance (CLUM) sur la surface de projection (S) résultant en des points de luminance (pl) ;
      - calculer la position (PosL2) de chaque point de luminance (pl) dans le référentiel image (RI) ;
      - à partir de sa position (PosL2) et de la position d'observation (PosO2) de l'observateur (O) dans ledit référentiel image (RI), définir les coordonnées (ply, plz) de la projection (plr) de chaque point de luminance (pl) sur le plan image (P1) de ladite image à projeter (Ip) ;
      - si ladite projection (plr) appartient à ladite image à projeter (Ip), définir des coordonnées (lig, col) du pixel (Pix) correspondant ;

   pour chaque projection (plr) d'un point de luminance (pl) appartenant à ladite image à projeter (Ip), corriger la valeur d'intensité (Vi) de l'indicatrice d'intensité correspondante (pf) en fonction de la couleur (Co) du pixel correspondant (Pix).

2. Procédé de projection (MTH) selon la revendication précédente, dans lequel le calcul de la cartographie de luminance (CLUM) sur la surface de projection (S) comprend les étapes de :

   - effectuer un premier calcul de la position (POSpf) desdites indicatrices d'intensité (pf) sur la surface de projection (S) résultant en des points d'impact (pì);
   - effectuer un deuxième calcul d'une cartographie d'éclairement (CECL) desdits points d'impact (pi) ;
   - effectuer un troisième calcul de la cartographie de luminance (CLUM) desdits points d'impacts (pi) à partir de la cartographie d'éclairement (CECL) résultant en lesdits points de luminance (pl).

3. Procédé de projection (MTH) selon la revendication précédente, dans lequel ledit premier calcul est basé sur :

   - la position (POSpj) du module lumineux (ML) ; et
   - la direction (dir1) desdites indicatrices d'intensité (pf).

4. Procédé de projection (MTH) selon la revendication 2 ou la revendication 3, dans lequel ledit deuxième calcul est basé sur :

   - la position (POSpf) calculée des indicatrices d'intensité (pf) ;
   - l'intensité lumineuse (I($\theta$,5)) desdites indicatrices d'intensité (pf) ; et
   - la distance (dist1) entre le module lumineux (ML) et lesdits points d'impacts (pi).

5. Procédé de projection (MTH) selon l'une quelconque des revendications précédentes, dans lequel l'image à projeter est calculée en fonction de propriétés de la surface de projection.

6. Procédé de projection (MTH) selon la revendication précédente, prise en combinaison avec l'une quelconque des revendications précédentes 2 à 4, dans lequel ledit troisième calcul est basé sur :

   - l'éclairement (E) desdits points d'impacts (pi) ;
   - un vecteur de position (Roeil) entre la position d'un point d'impact (pi) de la cartographie d'éclairement (CECL) et la position d'observation (PosO1) de l'observateur (O) ; et
   - une fonction de diffusion de la lumière (d).

7. Procédé de projection (MTH) selon l'une quelconque des revendications précédentes, dans lequel le calcul de la position (PosO2) d'observation d'un observateur (O) et de la position d'un point de luminance (pl) dans le référentiel image (RI) est basé sur au moins une matrice de transformation (M) du référentiel module lumineux (RP) vers ledit référentiel image (RI) qui prend en compte au moins un des paramètres suivants :

   - la position (Poslp) de l'image à projeter (Ip) dans le référentiel module lumineux (RP) ;
   - la rotation (Rotlp) de l'image à projeter (Ip).

8. Procédé de projection (MTH) selon l'une quelconque des revendications précédentes dans lequel la définition des coordonnées (ply, plz) d'une projection (plr) d'un point de luminance (pl) comprend les sous-étapes de :

   - calculer le point d'intersection (Int) entre :

     - la droite passant par la position d'observation (PosO2) dans ledit référentiel image (RI) de l'observateur (O) et par la position (PosL2) dans ledit référentiel image (RI) dudit point de luminance (pl) ; et
     - le plan image (P1) de l'image à projeter (Ip) ;

   - déterminer les coordonnées (ply, plz) dudit point d'intersection (Int) à partir de des dimensions (L1, **H1)** de ladite image à projeter (Ip).

9. Procédé de projection (MTH) selon l'une quelconque des revendications précédentes, dans lequel la surface de projection (S) est un sol ou un mur.

10. Procédé de projection (MTH) selon l'une quelconque des revendications précédentes, dans lequel le calcul de la position d'observation (PosO2) de l'observateur (O) dans le référentiel image (RI) est fonction de la position (Poslp) et de la rotation (Rotlp) de l'image à projeter (Ip) dans le référentiel module lumineux (RP), ladite rotation (Rotlp) étant fonction d'un angle site ($\epsilon$) supérieur à -90° et inférieur ou égal à 0°.

11. Procédé de projection (MTH) selon l'une quelconque des revendications précédentes, dans lequel le calcul de la position (PosL2) de chaque point de luminance (pl) dans le référentiel image (RI) est fonction de la position (Poslp) et de la rotation (Rotlp) de l'image à projeter (Ip) dans le référentiel module lumineux (RP), ladite rotation (Rotlp) étant fonction d'un angle site ($\epsilon$) supérieur à -90° et inférieur ou égal à 0°.

12. Procédé de projection (MTH) selon l'une quelconque des revendications précédentes, dans lequel la correction de la valeur d'intensité (Vi) de l'indicatrice d'intensité (pf) est effectuée comme suit : Vi = $\sigma$.Vi0*Co/255, avec Vi la valeur d'intensité corrigée, Vi0 la valeur d'intensité initiale de l'indicatrice d'intensité (pf) du module lumineux (ML), Co la couleur du pixel (Pix) correspondant, $\sigma$ un facteur de surintensification maximale.

13. Procédé de projection (MTH) selon l'une quelconque des revendications précédentes, dans lequel la correction de la valeur d'intensité (Vi) de l'indicatrice d'intensité (pf) est effectuée comme suit :
Vi=$\varphi$.Co, avec Vi la valeur d'intensité corrigée, $\varphi$ un coefficient de luminance, Co la couleur du pixel (Pix) correspondant.

14. Procédé de projection (MTH) selon l'une quelconque des revendications précédentes, dans lequel la projection de ladite image (Ip) sur la surface de projection (S) comporte en outre la sous-étape de projeter au moyen dudit module lumineux (ML) sur la surface de projection (S) le faisceau lumineux (Fx) avec les valeurs d'intensité (Vi) corrigées des indicatrices d'intensité (pf).

15. Dispositif d'éclairage (DISP) d'un véhicule automobile (V) comprenant une unité de traitement (PR) et un module lumineux (ML) adapté pour projeter un faisceau lumineux (Fx), dans lequel :

- ladite unité de traitement (PR) est adaptée pour :

- détecter une position d'observation (PosO1) d'un observateur (O) dans un référentiel module lumineux (RP) en considérant que :

- lorsque l'observateur (O) se trouve à l'intérieur du véhicule automobile, la position d'observation se situe au niveau de l'œil du conducteur ;
- lorsque l'observateur (O) se trouve à l'extérieur du véhicule automobile, dit observateur extérieur, la position d'observation se situe au niveau de l'œil dudit observateur extérieur;

- calculer la position d'observation (PosO2) de l'observateur (O) dans un référentiel image (RI) ;

- ledit dispositif d'éclairage (DISP) est adapté pour projeter ladite image (Ip) sur ladite surface de projection (S) en fonction de ladite position d'observation (PosO2) de l'observateur (O) dans le référentiel image (RI), ladite image (Ip) étant intégrée dans ledit faisceau lumineux (Fx) du module lumineux (ML),

**caractérisé en ce que** pour la projection de ladite image (Ip) sur la surface de projection (S), ladite unité de traitement (PR) est en outre adaptée pour :

- à partir d'une carte d'intensité lumineuse (CLUX) du faisceau lumineux (Fx) du module lumineux (ML) comprenant une pluralité d'indicatrices d'intensité (pf), calculer une cartographie de luminance (CLUM) sur la surface de projection (S) résultant en des points de luminance (pl) ;
- calculer la position (PosL2) de chaque point de luminance (pl) dans le référentiel image (RI) ;
- à partir de sa position (PosL2) et de la position d'observation (PosO2) de l'observateur (O) dans ledit référentiel image (RI), définir les coordonnées (ply, plz) de la projection (plr) de chaque point de luminance (pl) sur le plan image (P1) de ladite image à projeter (Ip) ;
- si ladite projection (plr) appartient à ladite image à projeter (Ip), définir des coordonnées (lig, col) du pixel (Pix) correspondant ;
- pour chaque projection (plr) d'un point de luminance (pl) appartenant à ladite image à projeter (Ip), corriger la valeur d'intensité (Vi) de l'indicatrice d'intensité correspondante (pf) en fonction de la couleur (Co) du pixel correspondant (Pix).

16. Dispositif d'éclairage (DISP) selon la revendication précédente, dans lequel pour la projection de ladite image (Ip) sur la surface de projection (S), le module lumineux (ML) est adapté pour projeter sur la surface de projection (S) le faisceau lumineux (Fx) avec les valeurs d'intensité (Vi) corrigées des indicatrices d'intensité (pf).

17. Dispositif d'éclairage selon la revendication 15 ou selon la revendication 16, dans lequel le dispositif d'éclairage est un projecteur ou un feu arrière.

18. Véhicule automobile comprenant un dispositif d'éclairage selon l'une quelconque des revendications 15 à 17.

**Patentansprüche**

1. Projektionsverfahren (MTH) für ein Kraftfahrzeug (V) von mindestens einem Bild (Ip) auf eine Projektionsfläche (S) mittels eines Lichtmoduls (ML) eines Kraftfahrzeugs, das zum Projizieren eines Lichtstrahls (Fx) geeignet ist, wobei das Projektionsverfahren (MTH) die folgenden Schritte umfasst:

   - Erfassen einer Beobachtungsposition (Pos01) eines Beobachters (0) in einem Lichtmodul-Bezugssystem (RP), wobei dieser Schritt darin besteht zu berücksichtigen, dass:

      • wenn sich der Beobachter (0) innerhalb des Kraftfahrzeugs befindet, die Beobachtungsposition auf Höhe des Auges des Fahrers liegt;
      • wenn sich der Beobachter (0) außerhalb des Kraftfahrzeugs befindet, besagter externer Beobachter, die Beobachtungsposition auf Höhe des Auges des besagten externen Beobachters liegt;

   - Berechnen der Beobachtungsposition (PosO2) des Beobachters (0) in einem Bild-Bezugssystem (RI);
   - Projizieren des besagten Bildes (Ip) auf die besagte Projektionsfläche (S) in Abhängigkeit von der besagten Beobachtungsposition (PosO2) des Beobachters (0) in dem besagten Bild-Bezugssystem (RI), wobei das besagte Bild (Ip) in den besagten Lichtstrahl (Fx) des Lichtmoduls (ML) integriert ist, **dadurch gekennzeichnet, dass** die Projektion des besagten Bildes (Ip) die Unterschritte umfasst:

      • ausgehend von einer Lichtintensitätskarte (CLUX) des Lichtstrahls (Fx) des Lichtmoduls (ML), die eine Vielzahl von Intensitätsindikatoren (pf) umfasst, Berechnen einer Leuchtdichtekartierung (CLUM) auf der Projektionsfläche (S), die zu Leuchtdichtepunkten (pl) führt;
      • Berechnen der Position (PosL2) jedes Leuchtdichtepunkts (pl) im Bild-Bezugssystem (RI);
      • ausgehend von seiner Position (PosL2) und der Beobachtungsposition (PosO2) des Beobachters (0) in dem besagten Bild-Bezugssystem (RI), Definieren der Koordinaten (ply, plz) der Projektion (plr) jedes Leuchtdichtepunkts (pl) auf die Bildebene (P1) des besagten zu projizierenden Bildes (Ip);
      • wenn die besagte Projektion (plr) zu dem besagten zu projizierenden Bild (Ip) gehört, Definieren der Koordinaten (lig, col) des entsprechenden Pixels (Pix);

   für jede Projektion (plr) eines Leuchtdichtepunkts (pl), der zu dem besagten zu projizierenden Bild (Ip) gehört, Korrigieren des Intensitätswerts (Vi) des entsprechenden Intensitätsindikators (pf) in Abhängigkeit von der Farbe (Co) des entsprechenden Pixels (Pix).

2. Projektionsverfahren (MTH) nach dem vorhergehenden Anspruch, wobei die Berechnung der Leuchtdichtekartierung (CLUM) auf der Projektionsfläche (S) die Schritte umfasst:

   - Durchführen einer ersten Berechnung der Position (POSpf) der besagten Intensitätsindikatoren (pf) auf der Projektionsfläche (S), die zu Auftreffpunkten (pi) führt;
   - Durchführen einer zweiten Berechnung einer Beleuchtungskartierung (CECL) der besagten Auftreffpunkte (pi);
   - Durchführen einer dritten Berechnung der Leuchtdichtekartierung (CLUM) der besagten Auftreffpunkte (pi) ausgehend von der Beleuchtungskartierung (CECL), die zu den besagten Leuchtdichtepunkten (pl) führt.

3. Projektionsverfahren (MTH) nach dem vorhergehenden Anspruch, wobei die besagte erste Berechnung basiert auf:

   - der Position (POSpj) des Lichtmoduls (ML); und
   - der Richtung (dir1) der besagten Intensitätsindikatoren (pf).

4. Projektionsverfahren (MTH) nach Anspruch 2 oder Anspruch 3, wobei die besagte zweite Berechnung basiert auf:

   - der berechneten Position (POSpf) der Intensitätsindikatoren (pf);
   - der Lichtintensität (I(0,8)) der besagten Intensitätsindikatoren (pf); und
   - dem Abstand (dist1) zwischen dem Lichtmodul (ML) und den besagten Auftreffpunkten (pi).

5. Projektionsverfahren (MTH) nach einem der vorhergehenden Ansprüche, wobei das zu projizierende Bild in Abhängigkeit von Eigenschaften der Projektionsfläche berechnet wird.

6. Projektionsverfahren (MTH) nach dem vorhergehenden Anspruch, in Kombination mit einem der vorhergehenden Ansprüche 2 bis 4, wobei die besagte dritte Berechnung basiert auf:

- der Beleuchtung (E) der besagten Auftreffpunkte (pi);
- einem Positionsvektor (Roeil) zwischen der Position eines Auftreffpunkts (pi) der Beleuchtungskartierung (CECL) und der Beobachtungsposition (Pos01) des Beobachters (0); und
- einer Lichtstreuungsfunktion (d).

7. Projektionsverfahren (MTH) nach einem der vorhergehenden Ansprüche, wobei die Berechnung der Beobachtungsposition (PosO2) eines Beobachters (0) und der Position eines Leuchtdichtepunkts (pl) im Bild-Bezugssystem (RI) auf mindestens einer Transformationsmatrix (M) vom Lichtmodul-Bezugssystem (RP) zum besagten Bild-Bezugssystem (RI) basiert, die mindestens einen der folgenden Parameter berücksichtigt:

- die Position (Poslp) des zu projizierenden Bildes (Ip) im Lichtmodul-Bezugssystem (RP);
- die Rotation (Rotlp) des zu projizierenden Bildes (Ip).

8. Projektionsverfahren (MTH) nach einem der vorhergehenden Ansprüche, wobei die Definition der Koordinaten (ply, plz) einer Projektion (plr) eines Leuchtdichtepunkts (pl) die Unterschritte umfasst:

- Berechnen des Schnittpunkts (Int) zwischen:

• der Geraden, die durch die Beobachtungsposition (PosO2) im besagten Bild-Bezugssystem (RI) des Beobachters (O) und durch die Position (PosL2) im besagten Bild-Bezugssystem (RI) des besagten Leuchtdichtepunkts (pl) verläuft; und
• der Bildebene (P1) des zu projizierenden Bildes (Ip);

- Bestimmen der Koordinaten (ply, plz) des besagten Schnittpunkts (Int) ausgehend von den Abmessungen (L1, H1) des besagten zu projizierenden Bildes (Ip).

9. Projektionsverfahren (MTH) nach einem der vorhergehenden Ansprüche, wobei die Projektionsfläche (S) ein Boden oder eine Wand ist.

10. Projektionsverfahren (MTH) nach einem der vorhergehenden Ansprüche, wobei die Berechnung der Beobachtungsposition (PosO2) des Beobachters (O) im Bild-Bezugssystem (RI) von der Position (Poslp) und der Rotation (Rotlp) des zu projizierenden Bildes (Ip) im Lichtmodul-Bezugssystem (RP) abhängt, wobei die besagte Rotation (Rotlp) von einem Höhenwinkel (e) abhängt, der größer als -90° und kleiner oder gleich 0° ist.

11. Projektionsverfahren (MTH) nach einem der vorhergehenden Ansprüche, wobei die Berechnung der Position (PosL2) jedes Leuchtdichtepunkts (pl) im Bild-Bezugssystem (RI) von der Position (Poslp) und der Rotation (Rotlp) des zu projizierenden Bildes (Ip) im Lichtmodul-Bezugssystem (RP) abhängt, wobei die besagte Rotation (Rotlp) von einem Höhenwinkel (e) abhängt, der größer als -90° und kleiner oder gleich 0° ist.

12. Projektionsverfahren (MTH) nach einem der vorhergehenden Ansprüche, wobei die Korrektur des Intensitätswerts (Vi) des Intensitätsindikators (pf) wie folgt durchgeführt wird: Vi = $\sigma$. Vi0*Co/255, wobei Vi der korrigierte Intensitätswert ist, Vi0 der anfängliche Intensitätswert des Intensitätsindikators (pf) des Lichtmoduls (ML), Co die Farbe des entsprechenden Pixels (Pix), $\sigma$ ein maximaler Überintensivierungsfaktor.

13. Projektionsverfahren (MTH) nach einem der vorhergehenden Ansprüche, wobei die Korrektur des Intensitätswerts (Vi) des Intensitätsindikators (pf) wie folgt durchgeführt wird: Vi=o.Co, wobei Vi der korrigierte Intensitätswert ist, O ein Leuchtdichtekoeffizient, Co die Farbe des entsprechenden Pixels (Pix).

14. Projektionsverfahren (MTH) nach einem der vorhergehenden Ansprüche, wobei die Projektion des besagten Bildes (Ip) auf die Projektionsfläche (S) ferner den Unterschritt umfasst, mittels des besagten Lichtmoduls (ML) auf die Projektionsfläche (S) den Lichtstrahl (Fx) mit den korrigierten Intensitätswerten (Vi) der Intensitätsindikatoren (pf) zu projizieren.

15. Beleuchtungsvorrichtung (DISP) eines Kraftfahrzeugs (V), umfassend eine Verarbeitungseinheit (PR) und ein Lichtmodul (ML), das zum Projizieren eines Lichtstrahls (Fx) geeignet ist, wobei:

- die besagte Verarbeitungseinheit (PR) geeignet ist zum:

- Erfassen einer Beobachtungsposition (Pos01) eines Beobachters (0) in einem Lichtmodul-Bezugssystem (RP) unter Berücksichtigung, dass:

• wenn sich der Beobachter (0) innerhalb des Kraftfahrzeugs befindet, die Beobachtungsposition auf Höhe des Auges des Fahrers liegt;
• wenn sich der Beobachter (0) außerhalb des Kraftfahrzeugs befindet, besagter externer Beobachter, die Beobachtungsposition auf Höhe des Auges des besagten externen Beobachters liegt;
- Berechnen der Beobachtungsposition (PosO2) des Beobachters (O) in einem Bild-Bezugssystem (RI);

- die besagte Beleuchtungsvorrichtung (DISP) geeignet ist, das besagte Bild (Ip) auf die besagte Projektionsfläche (S) in Abhängigkeit von der besagten Beobachtungsposition (PosO2) des Beobachters (0) im Bild-Bezugssystem (RI) zu projizieren, wobei das besagte Bild (Ip) in den besagten Lichtstrahl (Fx) des Lichtmoduls (ML) integriert ist, **dadurch gekennzeichnet, dass** für die Projektion des besagten Bildes (Ip) auf die Projektionsfläche (S) die besagte Verarbeitungseinheit (PR) ferner geeignet ist zum:

- ausgehend von einer Lichtintensitätskarte (CLUX) des Lichtstrahls (Fx) des Lichtmoduls (ML), die eine Vielzahl von Intensitätsindikatoren (pf) umfasst, Berechnen einer Leuchtdichtekartierung (CLUM) auf der Projektionsfläche (S), die zu Leuchtdichtepunkten (pl) führt;
- Berechnen der Position (PosL2) jedes Leuchtdichtepunkts (pl) im Bild-Bezugssystem (RI);
- ausgehend von seiner Position (PosL2) und der Beobachtungsposition (PosO2) des Beobachters (0) in dem besagten Bild-Bezugssystem (RI), Definieren der Koordinaten (ply, plz) der Projektion (plr) jedes Leuchtdichtepunkts (pl) auf die Bildebene (P1) des besagten zu projizierenden Bildes (Ip);
- wenn die besagte Projektion (plr) zu dem besagten zu projizierenden Bild (Ip) gehört, Definieren der Koordinaten (lig, col) des entsprechenden Pixels (Pix);
- für jede Projektion (plr) eines Leuchtdichtepunkts (pl), der zu dem besagten zu projizierenden Bild (Ip) gehört, Korrigieren des Intensitätswerts (Vi) des entsprechenden Intensitätsindikators (pf) in Abhängigkeit von der Farbe (Co) des entsprechenden Pixels (Pix).

16. Beleuchtungsvorrichtung (DISP) nach dem vorhergehenden Anspruch, wobei für die Projektion des besagten Bildes (Ip) auf die Projektionsfläche (S) das Lichtmodul (ML) geeignet ist, auf die Projektionsfläche (S) den Lichtstrahl (Fx) mit den korrigierten Intensitätswerten (Vi) der Intensitätsindikatoren (pf) zu projizieren.

17. Beleuchtungsvorrichtung nach Anspruch 15 oder nach Anspruch 16, wobei die Beleuchtungsvorrichtung ein Projektor oder ein Rücklicht ist.

18. Kraftfahrzeug, umfassend eine Beleuchtungsvorrichtung nach einem der Ansprüche 15 bis 17.

## Claims

1. Projection method (MTH) for a motor vehicle (V) of at least one image (Ip) on a projection surface (S) by means of a light module (ML) of a motor vehicle adapted to project a light beam (Fx), said projection method (MTH) comprising the following steps:

- detecting an observation position (PosO1) of an observer (0) in a light module reference frame (RP), said step consisting in considering that:

• when the observer (0) is inside the motor vehicle, the observation position is at the level of the driver's eye;
• when the observer (0) is outside the motor vehicle, said external observer, the observation position is at the level of the eye of said external observer;

- calculating the observation position (PosO2) of the observer (0) in an image reference frame (RI);
- projecting said image (Ip) on said projection surface (S) according to said observation position (PosO2) of the observer (0) in said image reference frame (RI), said image (Ip) being integrated in said light beam (Fx) of the light module (ML), **characterized in that** the projection of said image (Ip) includes the substeps of:

• from a light intensity map (CLUX) of the light beam (Fx) of the light module (ML) comprising a plurality of intensity indicators (pf), calculating a luminance mapping (CLUM) on the projection surface (S) resulting in luminance points (pl);
• calculating the position (PosL2) of each luminance point (pl) in the image reference frame (RI);
• from its position (PosL2) and the observation position (PosO2) of the observer (0) in said image reference frame (RI), defining the coordinates (ply, plz) of the projection (plr) of each luminance point (pl) on the image plane (P1) of said image to be projected (Ip);
• if said projection (plr) belongs to said image to be projected (Ip), defining coordinates (lig, col) of the corresponding pixel (Pix);
• for each projection (plr) of a luminance point (pl) belonging to said image to be projected (Ip), correcting the intensity value (Vi) of the corresponding intensity indicator (pf) according to the color (Co) of the corresponding pixel (Pix).

2. Projection method (MTH) according to the preceding claim, wherein the calculation of the luminance mapping (CLUM) on the projection surface (S) comprises the steps of:

- performing a first calculation of the position (POSpf) of said intensity indicators (pf) on the projection surface (S) resulting in impact points (pi);
- performing a second calculation of an illumination mapping (CECL) of said impact points (pi);
- performing a third calculation of the luminance mapping (CLUM) of said impact points (pi) from the illumination mapping (CECL) resulting in said luminance points (pl).

3. Projection method (MTH) according to the preceding claim, wherein said first calculation is based on: CLAIMS

- the position (POSpj) of the light module (ML); and
- the direction (dir1) of said intensity indicators (pf).

4. Projection method (MTH) according to claim 2 or claim 3, wherein said second calculation is based on:

- the calculated position (POSpf) of the intensity indicators (pf);
- the light intensity (I(0,8)) of said intensity indicators (pf); and
- the distance (dist1) between the light module (ML) and said impact points (pi).

5. Projection method (MTH) according to any one of the preceding claims, wherein the image to be projected is calculated according to properties of the projection surface.

6. Projection method (MTH) according to the preceding claim, taken in combination with any one of the preceding claims 2 to 4, wherein said third calculation is based on:

- the illumination (E) of said impact points (pi);
- a position vector (Roeil) between the position of an impact point (pi) of the illumination mapping (CECL) and the observation position (PosO1) of the observer (O); and
- a light diffusion function (d).

7. Projection method (MTH) according to any one of the preceding claims, wherein the calculation of the observation position (PosO2) of an observer (O) and the position of a luminance point (pl) in the image reference frame (RI) is based on at least one transformation matrix (M) from the light module reference frame (RP) to said image reference frame (RI) that takes into account at least one of the following parameters:

- the position (PosIp) of the image to be projected (Ip) in the light module reference frame (RP);
- the rotation (RotIp) of the image to be projected (Ip).

8. Projection method (MTH) according to any one of the preceding claims wherein the definition of the coordinates (ply, plz) of a projection (plr) of a luminance point (pl) comprises the sub-steps of:

- calculating the intersection point (Int) between:

• the line passing through the observation position (PosO2) in said image reference frame (RI) of the observer (0) and through the position (PosL2) in said image reference frame (RI) of said luminance point (pl); and
• the image plane (P1) of the image to be projected (Ip);

- determining the coordinates (ply, plz) of said intersection point (Int) from the dimensions (L1, H1) of said image to be projected (Ip).

9. Projection method (MTH) according to any one of the preceding claims, wherein the projection surface (S) is a floor or a wall.

10. Projection method (MTH) according to any one of the preceding claims, wherein the calculation of the observation position (PosO2) of the observer (O) in the image reference frame (RI) is a function of the position (Poslp) and the rotation (Rotlp) of the image to be projected (Ip) in the light module reference frame (RP), said rotation (Rotlp) being a function of a site angle (e) greater than -90° and less than or equal to 0°.

11. Projection method (MTH) according to any one of the preceding claims, wherein the calculation of the position (PosL2) of each luminance point (pl) in the image reference frame (RI) is a function of the position (Poslp) and the rotation (Rotlp) of the image to be projected (Ip) in the light module reference frame (RP), said rotation (Rotlp) being a function of a site angle (e) greater than -90° and less than or equal to 0°.

12. Projection method (MTH) according to any one of the preceding claims, wherein the correction of the intensity value (Vi) of the intensity indicator (pf) is performed as follows: $Vi = \sigma \cdot Vi0*Co/255$, with Vi the corrected intensity value, Vi0 the initial intensity value of the intensity indicator (pf) of the light module (ML), Co the color of the corresponding pixel (Pix), $\sigma$ a maximum over-intensification factor.

13. Projection method (MTH) according to any one of the preceding claims, wherein the correction of the intensity value (Vi) of the intensity indicator (pf) is performed as follows: $Vi=o \cdot Co$, with Vi the corrected intensity value, o a luminance coefficient, Co the color of the corresponding pixel (Pix).

14. Projection method (MTH) according to any one of the preceding claims, wherein the projection of said image (Ip) on the projection surface (S) further includes the sub-step of projecting by means of said light module (ML) on the projection surface (S) the light beam (Fx) with the corrected intensity values (Vi) of the intensity indicators (pf).

15. Lighting device (DISP) of a motor vehicle (V) comprising a processing unit (PR) and a light module (ML) adapted to project a light beam (Fx), wherein:

- said processing unit (PR) is adapted to:

• detect an observation position (PosO1) of an observer (O) in a light module reference frame (RP) considering that:

✓ when the observer (O) is inside the motor vehicle, the observation position is at the level of the driver's eye;
✓ when the observer (O) is outside the motor vehicle, said external observer, the observation position is at the level of the eye of said external observer;

• calculate the observation position (PosO2) of the observer (O) in an image reference frame (RI);

- said lighting device (DISP) is adapted to project said image (Ip) on said projection surface (S) according to said observation position (PosO2) of the observer (O) in the image reference frame (RI), said image (Ip) being integrated in said light beam (Fx) of the light module (ML),

**characterized in that** for the projection of said image (Ip) on the projection surface (S), said processing unit (PR) is further adapted to:

- from a light intensity map (CLUX) of the light beam (Fx) of the light module (ML) comprising a plurality of intensity indicators (pf), calculate a luminance mapping (CLUM) on the projection surface (S) resulting in luminance points (pl);
- calculate the position (PosL2) of each luminance point (pl) in the image reference frame (RI);

- from its position (PosL2) and the observation position (PosO2) of the observer (O) in said image reference frame (RI), define the coordinates (ply, plz) of the projection (plr) of each luminance point (pl) on the image plane (P1) of said image to be projected (Ip);

- if said projection (plr) belongs to said image to be projected (Ip), define coordinates (lig, col) of the corresponding pixel (Pix);

- for each projection (plr) of a luminance point (pl) belonging to said image to be projected (Ip), correct the intensity value (Vi) of the corresponding intensity indicator (pf) according to the color (Co) of the corresponding pixel (Pix).

16. Lighting device (DISP) according to the preceding claim, wherein for the projection of said image (Ip) on the projection surface (S), the light module (ML) is adapted to project on the projection surface (S) the light beam (Fx) with the corrected intensity values (Vi) of the intensity indicators (pf).

17. Lighting device according to claim 15 or according to claim 16, wherein the lighting device is a projector or a rear light.

18. Motor vehicle comprising a lighting device according to any one of claims 15 to 17.

MTH

1 — DET_POS(O, PosO1, RP)

2 — DET_POS(O, PosO2, RI)

3 —

PROJ(Fx, Ip, S)

3a — CALC_CLUM(CLUX, S, pl)

3b — CALC_POS(pl, PosL2, O, RI)

3c — DEF_PLR(plr, P1, PosL2, PosO2)

3d — DEF_PIX(pl(lig, col), ply, plz)

3e — MOD_PF(pf, Vi, Pix, Co)

3f — PROJ(ML, Fx, Vi, pf)

Fig. 1

Fig. 2

Fig. 3

Rx

DISP

Fig. 4

CALC_CLUM(CLUX, S, pl)

3a

i    CALC_POSF(pf, POSpf, pi)

ii   CALC_CECL(pi, CECL)

iii  CALC_CLUM(pi, CECL)

Fig. 5

DISP

S=S1

pi

Fig. 6

DISP

dist1

δ

S=S1

E

pi

Fig. 7

Fig. 8

Fig. 9

Fig. 10

Fig. 11

Fig. 12

Fig. 13

Fig. 14

Fig. 15

Fig. 16

DISP

PR

DET_POS(O, PosO1, RP)

DET_POS(O, PosO2, RI)

CALC_CLUM(CLUX, S, pl)

CALC_POS(pl, PosL2, O, RI)

DEF_PLR(plr, P1, PosL2, PosO2)

DEF_PIX(pl(lig, col), ply, plz)

MOD_PF(pf, Vi, Pix, Co)

PROJ(Fx, Ip, S)

ML

PROJ(ML, Fx, Vi, pf)

Fig. 17

**RÉFÉRENCES CITÉES DANS LA DESCRIPTION**

**Documents brevets cités dans la description**

*   EP 2233356 A1
*   JP 2009184428 A